(19) Europäisches Patentamt
European Patent Office
Office européen des brevets

(11) **EP 3 942 940 A1**

(12) **EUROPEAN PATENT APPLICATION**

(43) Date of publication:
**26.01.2022 Bulletin 2022/04**

(21) Application number: **20187695.0**

(22) Date of filing: **24.07.2020**

(51) International Patent Classification (IPC):
**A23K 10/38** $^{(2016.01)}$ **A23L 7/10** $^{(2016.01)}$
**A23L 7/20** $^{(2016.01)}$ **C12F 3/06** $^{(2006.01)}$
**A23K 30/15** $^{(2016.01)}$

(52) Cooperative Patent Classification (CPC):
**A23L 7/197; A23K 10/38; A23K 30/15;
A23L 7/198; A23L 7/20; C12F 3/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Biograin ApS
4270 Høng (DK)**

(72) Inventors:
• **ØSTERGAARD, Geo
4400 Kalundborg (DK)**
• **OLOFSSON, Lars
4200 Slagelse (DK)**

(74) Representative: **Patrade A/S
Ceresbyen 75
8000 Aarhus C (DK)**

(54) **SPENT GRAIN-DERIVED FOOD ADDITIVE**

(57) The present invention concerns a method for providing a food additive from moist spent grain, comprising adjusting the pH of the spent grain to 4.5 or below by addition of a pH regulator.

Figure 3

**Description**

**Field of the Invention**

The present invention relates to cereal-based food additives, including methods and systems for their manufacture. In particular, the present invention concerns the provision of a food additive for human or animal consumption from spent grain.

**Background of the Invention**

There is a general need for recycling and/or novel use for waste products, comprising upgrading waste products. This comprises the provision of quality foodstuff for human consumption from e.g. waste products, in particular spent organic materials, including lignocellulosic material.

Brewing generates a waste product in the form of "spent grain", comprising the solid remnants of barley after mashing. Spent grain is the most abundant brewing by-product, comprising of 85% of by-products generated, 31% of original malt weight and 20 kg per 100 1 of beer produced. Spent grain is initially wet, with a short shelf-life, but can be dried and processed to preserve it. In 2014, around 8 million t of spent grain were generated in the EU and US alone. Spent grain is a residual by-product from one of the first steps in the brewing process in solubilizing the malt and/or cereal grains to ensure adequate extraction of the wort ("mashing"). It is a significant by-product in the total brewing process, accounting for 30% - 60% of the biochemical oxygen demand and suspended solids from a typical brewery. Spent grain is commonly used as a feedstock. However, spent grain comprises some challenges, includes the existence of a complex outer layer, making it difficult to separate and convert, and in particular a high moisture content (~80-85%), making it susceptible to microbial growth and thus spoilage (Buffington, 2014).

Industrial spent grain samples may comprise significant amounts of microorganisms, such as moulds, yeasts, aerobic and non-aerobic bacteria, e.g. lactic acid bacteria (LAB), which may also include pathogens. This seems to be facilitated by an only slightly acidic pH around pH 6, and a high water activity close to 1 and the presence of fermentable carbohydrates. As a consequence, spent grain appears not suitable for direct human consumption, in particular because of the microbial risks imposed by the non-controlled microbial flora, as well as the risk of spoilage during storage. Consequently, in order to utilize spent grain for human consumption, such as an additive to human foods, which is desirable in particular in view of its high protein and/or fibre content, spent grain is commonly dried, ground and then sifted into a powder that can increase fibre- and protein content, while decreasing caloric content, capable of e.g. replacing flour in baked goods and other foods.

WO 2018/202799 concerns a process for obtaining a foodstuff from spent grain containing the following steps: (a) comminuting the brewer's spent grain, (b) heating the brewer's spent grain, (c) optionally: fermenting the brewer's spent grain, d) optionally: reducing the moisture content of the brewer's spent grain.

Surprisingly and unexpectedly, the inventors have developed a method for providing a food additive from moist spent grain, which is microbially safe, possesses desirable organoleptic properties and is stable for a prolonged period, despite its high water activity and/or high water content. Furthermore, the process is not dependent on e.g. drying and or milling, as the prior art processes, providing e.g. cost, energy and/or $CO_2$ savings.

**Summary of the invention**

The present invention was made in view of the prior art described above, and the object of the present invention relates to the provision of a spent-grain derived consumable product, such as feed or food additive, as well as a system thereto. The food or feed additive suitable for incorporation in a feed or food product.

Thus, in a first aspect, the present invention concerns a method for providing a food or feed additive from spent-grain according to claim 1. Such a method may comprise the steps of:

(i) providing moist spent grain;
(ii) adjusting the pH of the spent grain to 4.5 or below, such as a pH in the range of 3.5-4.5, by addition of a pH regulator to provide a pH-adjusted product and/or food additive; and optionally
(iii) packaging said pH-adjusted product to provide a packaged pH-adjusted product and/or food additive; and optionally
(iv) subjecting said moist spent grain, pH-adjusted product, packaged product or food additive to a viable cell count-controlling treatment.

In a second aspect, the present invention pertains to product provided according to the first aspect, such as a feed or food additive.

In a third aspect, the present invention relates to uses of a feed or food additive according to the first aspect, or provided according to the second aspect.

In a fourth aspect, the present invention concerns to a food or feed product comprising e.g. 0.1-99.9% of a feed or food additive according to the first or second aspect.

In a fifth aspect, the present invention concerns a system for providing a feed or food additive according to the first or second aspect. In particular, such a system may comprise: (x) solid/liquid separation means (20) such as a lauter tun or mash filtration system for providing a moist spent grain from a mash; (y) conservation means (50) for contacting the moist spent grain with at least one conservation agent (51, 52), said conservation means comprising pH adjusting means for providing pH-adjusted moist spent grain, comprising e.g.:

(i) a pH monitoring device, such as pH meter
(ii) a dosage device for addition of one or more conservation agents (51, 52),
(iii) and optionally stirring means (58) such as a mixer for mixing the moist spent grain;
and optionally (x) packaging means (70) such as a filling system for packaging the pH-adjusted and/or conserved spent grain in a sealable container and/or tank.

In a sixth aspect, the present invention pertains to a computer program product comprising software code portions configured for, when run in the memory of a computer, executing the method according to the first aspect, and/or controlling the system according to the fifth aspect.

**Brief description of the Drawing**

**Figure 1.** Schematic representation of the provision of a food additive and a food product according to some embodiments of the invention.
**Figure 2.** Schematic representation of the provision of a food additive and a food product according to some embodiments of the invention, wherein the food additive is transported.
**Figure 3.** Schematic representation of different options for the provision of a food additive and a food product according to some embodiments of the invention, which may include different transporting and/or storage steps.
**Figure 4.** Schematic representation of the provision of a food additive and a food product according to some embodiments of the invention, comprising storage before and/or after packaging.
**Figure 5.** Schematic representation of the provision of a food additive and a food product according to some embodiments of the invention, comprising storage before packaging.
**Figure 6.** Schematic representation of the provision of a food additive and a food product according to some embodiments of the invention, wherein the food additive is packaged directly and transported to the food product production site.
**Figure 7.** Schematic representation of the provision of a food additive and a food product according to some embodiments of the invention, wherein the moist spent grain is either pumped to a storage tank or subjected to one or more conservation steps to provide the food additive, which is then packaged.
**Figure 8.** Schematic representation of the provision of a food additive as shown in

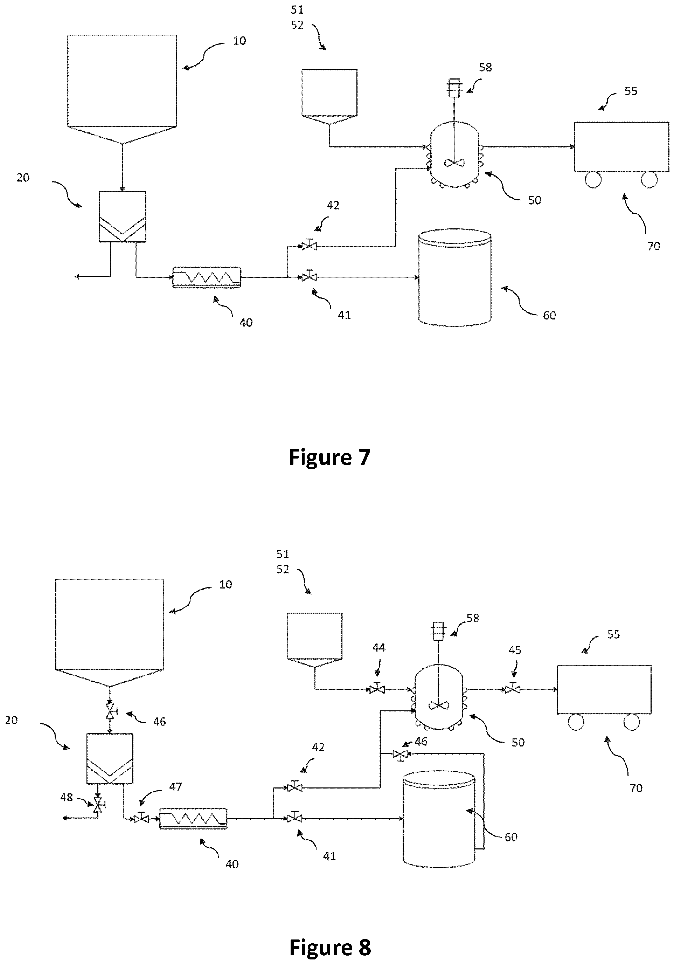

Figure 7, comprising, *inter alia,* means for enabling transfer of the moist spent grain from the storage tank to the conservation step.

*Table I: Reference numbers*

| Ref. Nr, | Function | Means |
|---|---|---|
| 10 | mashing | mashing means |
| 20 | solid/liquid separation | filtration means |
| 30 | brewing | fermentation means |
| 40 | transporting (e.g. pumping) | pumping means |
| 41-48 | flow regulation | 1st-8th flown regulation means (e.g. valve) |
| 50 | conservation | conservation means* |
| 51, 52 | | 1st, 2nd conservation agent |

(continued)

| Ref. Nr, | Function | Means |
|---|---|---|
| 55 | $O_2$ removal | $O_2$ removal means |
| 58 | mixing | stirring means |
| 60 | storage | storage means |
| 65 | storage | storage means |
| 70 | packaging | packaging means |
| 80 | transporting | transporting means |
| 90 | provision of a food product | food provision means |

*conservation means (50) may comprise a container, stirring means such as a stirrer, pH measuring means such as a pH-meter, and pH adjustment means such a dosage device for dosing defined amounts of a conservation agent.*

**Detailed Description of the Invention**

*Definitions:*

In the context of the present invention, the singular form of a word may include the plural, and vice versa, unless the context clearly dictates otherwise. Thus, the references "a," "an" and "the" are generally inclusive of the plurals of the respective terms. For example, reference to "an ingredient" or "a method" may include a plurality of such "ingredients" or "methods."

Similarly, the words "comprise," "comprises," and "comprising" are to be interpreted inclusively rather than exclusively. Embodiments provided by the present disclosure may lack any element that is not specifically disclosed herein. Thus, a disclosure of an embodiment defined using the term "comprising" is also a disclosure of embodiments "consisting essentially of" and "consisting of the disclosed components". Where used herein, terms like "for example", "e.g." or "such as", particularly when followed by a listing of terms, is merely exemplary and illustrative, and should not be deemed to be exclusive or comprehensive. Any embodiment disclosed herein may be combined with any other embodiment disclosed herein.

Unless expressed otherwise, all percentages expressed herein are by weight of the total weight of the composition.

As used herein, "about" is understood to refer to numbers in a range of numerals, for example the range of +/- 10, +/- 5, +/- 2, +/- 1, +/- 0.5, +/- 0.1 % of a referenced number or value. Moreover, all numerical ranges herein should be understood to include all integers, whole or fractions, within the range. "About" may also indicate the variations and/or uncertainties customary in the field. In some embodiments, "about" may also comprise +/- 20% of a referenced number or value.

The phrase "in some embodiments" can be used interchangeably with "in one or more embodiments".

A "subject" can e.g. be a human or an animal, such as a mammal, bird, reptile, husbandry, or pet. The present disclosure should not be construed as being limited to a specific animal, human or demography.

"Food" is to be construed as a product for consumption and/or ingestion by a subject, such as a human or an animal, whereas "feed" refers to a product for consumption and/or ingestion by an animal. Thus in the context of the present invention, the term "food" encompasses also "feed".

"Malt" is germinated cereal grain that has been dried in a process known as "malting", where the grain is made to germinate by soaking in water and is then halted from germinating further by drying, usually with hot air. Malting grain develops enzymes ($\alpha$-amylase, $\beta$-amylase) required for modifying the grains' starches into various types of sugar, including monosaccharide glucose, disaccharide maltose, trisaccharide maltotriose, and higher sugars called maltodextrines. Malting grain also develops other enzymes, such as proteases, that break down the proteins in the grain into forms that can be used by yeast.

Malt is also commonly used to make beer or whisky, but also malted milk, malt vinegar, confections such as Maltesers and Whoppers, flavored drinks such as Horlicks, Ovaltine, and Milo, and some baked goods.

Various cereals can be malted, though barley is the most common. There are many different types of malt, such as: Pilsner malt, Pale malt, Mild malt, Amber malt, Stout malt, Brown malt, Chocolate malt, black malt, Crystal malt, Distiller's malt, Peated malt, Vienna malt, Munich malt, Rauchmalz and Acid malt. Different types of malt can provide e.g. different flavors and/or different colors to the beer, or distilled product.

(Brewer's) spent grain (BSG) or draff

The terms "Brewer's spent grain", "spent grain", "BSG" or draff may be used interchangeably, and refer to a by-product of brewing using a cereal malt, such as barley malt or wheat malt. Commonly, spent grain is the solid fraction after solid/liquid separation after wort production in a beer brewing process. Spent grain comprises grain husks and parts of the pericarp and seed coat layers of the cereal used for brewing, usually barley or wheat. Spent grain is usually rich in cellulose, hemicelluloses, lignin, and protein. Furthermore, spent grain is also naturally high in fiber, making it of great interest as a food additive, e.g. by replacing or supplementing low-fiber ingredients. The type(s) or variety/ies of barley or other cereal(s) used may influence the composition and/or taste of the spent grain. In particular, the malting process may further influence the composition and/or taste of the spent grain, as well as the brewing process. Apart from barley and/or, wheat, oats, rye, sorghum, millet, rice and maize used in beer production, either malted or not, or any combination of malted and/or unmalted cereal.

In brewing, the term "adjunct(s)" is commonly used for unmalted cereals/grains (such as corn, rice, rye, oats, barley, and wheat) or grain products used in brewing beer which supplement the main mash ingredient, which is usually malted barley. Adjuncts are often used with the intention of cutting costs, but they may sometimes also be used to create one or more additional feature(s), such as better foam retention, flavors or nutritional value or additives. Commonly, an adjunct is a source of carbohydrates.

In some embodiments, the spent grain is derived uniquely from malt, preferably barley malt. In some embodiments, spent grain may also be derived from cereals other than barley, such as wheat, e.g. wheat and/or wheat malt from the production of "Weizenbier", also called "Hefeweizen" or Weißbier".

In the context of the present invention, spent grain may also comprise (or be derived from) other cereals than barley or remnants thereof, such as other malted or unmalted cereals, e.g. wheat, maize, rice, oats, rye, sorghum, millet, including any combination thereof. Thus in some embodiments, the spent grain comprises adjuncts and/or remnants thereof. In some other embodiments, the spent grain does not comprise adjuncts and/or remnants thereof.

Brewer's spent grain usually refers to a by-product of brewing using barley malt, while "distillers grains" are a cereal by-product of the distillation process. Distillers grains commonly refers to a by-product comprising remnants of corn/maize, rice, wheat and/or other grains.

"Wet distillers grains" or "WDG" contain primarily unfermented grain residues (protein, fiber, fat and up to 70% moisture). WDG, as BSG, has a short shelf life, and is often dried to increase its shelf life. Dried distillers grains with solubles (DDGS) is WDG that has been dried with the concentrated thin stillage to 10-12% moisture. DDGS have an almost indefinite shelf life and may be shipped to any market regardless of its proximity to an ethanol plant. Drying is costly, as it requires further energy input. In the US, it is packaged and traded as a commodity product. In the context of the present invention, the term "spent grain" may comprise any one of distillers grains, WDG, and DDGS.

The terms "pH regulator", "acidity regulator" or "pH control agent" can be used interchangeably and are meant to comprise compounds capable of changing or maintain pH. They can be organic, mineral acids, bases, neutralizing agents, or buffering agents, including salts of said organic or mineral acids. A pH regulator can be a natural compound or a synthetic compound. In the context of the present invention, a pH regulator is usually "food grade", i.e. an additive that is safe for human consumption. Acidity regulators are often indicated by their E number, such as E260 (acetic acid), or simply listed as "food acid" (see comprehensive list of E numbers herein).

*Acids*

Mineral (inorganic) acids:

A mineral acid or inorganic acid is any acid derived from an inorganic compound that dissociates to produce hydrogen ions ($H^+$) in water. Usually, mineral acids are highly soluble in water. Examples of mineral acids comprise e.g.: *Hydrochloric Acid* (HCl), *Nitric acid* (HNO3), *Sulfuric acid* (H2SO4), and *Sulfurous acid* (H2SO3). *Phosphoric Acid* (H3PO4) is also commonly used acidulant in the food and beverage industry, e.g. used in producing cola drinks, which are sold massively all over the world. This acid is known for its biting, harsh taste that perfectly complements the flavor of e.g. cola.

Organic acids

An organic acid can be described as organic compound with acidic properties. The most common organic acids are the carboxylic acids, whose acidity is associated with their carboxyl group -COOH. Sulfonic acids, containing the group -SO2OH, are relatively stronger acids. Alcohols, with -OH, can act as acids but they are usually weaker. The relative stability of the conjugate base of the acid determines its acidity. Other groups can also confer acidity, usually weakly: the thiol group -SH, the enol group, and the phenol group. Organic compounds containing these groups can also be referred to as organic acids.

*Acetic Acid* - Food grade acetic acid is known for its pungent smell and is found in vinegar. It is very commonly used in pickling industry as the vinegar that is fermented naturally has variable pH and thus, food grade acetic acid is used for creating pickling liquor that has a specified acidity. It is also used in flavorings and confectionary items. *Ascorbic Acid* (Vitamin C) - Naturally occurring in citric fruits, ascorbic acids has a number of uses as a natural food additive in commercial applications such as bakeries, drinks manufacturers, fruit processing plants, butchers and meat handlers.

*Carboxylic acid*

A carboxylic acid is that contains a carboxyl group (C(=O)OH). The general formula of a carboxylic acid is R-COOH, with R referring to the alkyl group. Carboxylic acids occur widely. Examples may e.g. comprise the following acids:

*Table II: List of carboxylic acids*

| C atoms | Common name | IUPAC name | Formula |
|---|---|---|---|
| 1 | Carbonic acid | Carbonic acid | $OHCOOH$ |
| 2 | Methanoic acid | Methanoic acid | $HCOOH$ |
| 3 | Ethanoic acid | Ethanoic acid | $CH_3COOH$ |
| 4 | Propanoic acid | Propanoic acid | $CH_3CH_2COOH$ |
| 5 | Butanoic acid | Butanoic acid | $CH_3(CH_2)_2COOH$ |
| 6 | Pentanoic acid | Pentanoic acid | $CH_3(CH_2)_3COOH$ |
| 7 | Hexanoic acid | Hexanoic acid | $CH_3(CH_2)_4COOH$ |
| 8 | Heptanoic acid | Heptanoic acid | $CH_3(CH_2)_5COOH$ |
| 9 | Octanoic acid | Octanoic acid | $CH_3(CH_2)_6COOH$ |
| 10 | Nonanoic acid | Nonanoic acid | $CH_3(CH_2)_7COOH$ |
| 11 | Decanoic acid | Decanoic acid | $CH_3(CH_2)_8COOH$ |
| 12 | Undecanoic acid | Undecanoic acid | $CH_3(CH_2)_9COOH$ |
| 13 | Dodecanoic acid | Dodecanoic acid | $CH_3(CH_2)_{10}COOH$ |
| 14 | Tridecanoic acid | Tridecanoic acid | $CH_3(CH_2)_{11}COOH$ |
| 15 | Tetradecanoic acid | Tetradecanoic acid | $CH_3(CH_2)_{12}COOH$ |
| 16 | Pentadecanoic acid | Pentadecanoic acid | $CH_3(CH_2)_{13}COOH$ |
| 17 | Hexadecanoic acid | Hexadecanoic acid | $CH_3(CH_2)_{14}COOH$ |
| 18 | Heptadecanoic acid | Heptadecanoic acid | $CH_3(CH_2)_{15}COOH$ |
| 19 | Octadecanoic acid | Octadecanoic acid | $CH_3(CH_2)_{16}COOH$ |
| 20 | Nonadecanoic acid | Nonadecanoic acid | $CH_3(CH_2)_{17}COOH$ |
| 21 | Icosanoic acid | Icosanoic acid | $CH_3(CH_2)_{18}COOH$ |

A carboxylic acid may also comprise one or more C=C double bonds.

A carboxylic acid may also comprise an aromatic ring, such as e.g. benzoic acid.

A carboxylic acid may also comprise two or more carboxyl groups, such as oxalic or citric acid.

A carboxylic acid may also comprise one or more hydroxy groups (also called hydroxyl- or OH-groups), such as e.g. lactic or tartaric acid.

*Citric Acid* - Citric acid, naturally found in fruits such as lemons, limes and grapefruit is e.g. responsible for the sour taste found in many fruits. Citric acid is very useful in commercial food applications as a preservative, with the acidic pH of the acid preventing bacteria from growing. Aside from this, it may also be used to give a sour flavor to dry foods such as seasoning salts and powders.

*Fumaric Acid* - This food acidulant that has a very strong taste. As it is not highly soluble, it only has some limited applications in the food and beverage industry. It is usually used in cheesecake mixes, dessert powders that contain gelatin, and powdered drinks. The strong flavor and reasonable price of fumaric acid make it an excellent choice for making feeds for animals.

*Formic Acid* - also called methanoic acid is a carboxylic acid.

*Lactic Acid* - Lactic acid is naturally found in products that go through fermentation including cheeses, yoghurts and some types of bread. In commercial environments, lactic acid is commonly used as an acidification agent or preservative; this may include meats, cheeses, poultry, fish, beverages, dressings and more.

*Malic Acid* - Malic acid forms during fruit metabolism and is present in all fruits and many vegetables. Malic acid is used as flavoring, with its sour flavor lending itself to confectionary, beverage processing, desserts, bakery products and some medical consumables such as throat lozenges.

*Oxalic Acid* - Its acid strength is much greater than that of acetic acid. Oxalic acid can also act as a reducing agent, and oxalate is a chelating agent e.g. for metal ions. It occurs naturally in many foods.

*Propionic Acid* - This acid is known to inhibit the growth of mold and some bacteria and is used as a preservative for both animal feed and food for human consumption, despite its rather unpleasant smell.

*Sorbic Acid* - Sorbic acid and its salts, such as sodium sorbate, potassium sorbate, and calcium sorbate, are antimicrobial agents often used as preservatives in food and drinks to prevent the growth of mold, yeast, and fungi. In general, the salts are preferred over the acid form, because they are more soluble in water, but the active form is the acid. The optimal pH for the antimicrobial activity is below pH 6.5. Sorbates are generally used at concentrations of 0.025% to 0.10%. Adding sorbate salts to food will, however, raise the pH of the food slightly so the pH may need to be adjusted to assure safety.

*Tartaric Acid* - Naturally occurring in some fruits, tartaric acid may be used as an additive to give s sharp, tart flavour in fruit juices, confectionary and wines.

*Trisodium Citrate* - Often referred to as 'sodium citrate', trisodium citrate is most commonly used as a preservative or flavouring. Commercial applications include use in fizzy drinks, ice creams, jams and sweets. Trisodium Citrate may also be used as an emulsifier to make cheese sauces.

pH regulators for use in foods are regulated, and common pH regulators have been assigned different "E numbers" (see Table III).

*Table III: pH regulators, their E-numbers and authorized use according to Webgate food database (https://webgate.ec.europa.eu/foods_system/main/)*

| E Nr. | Substance | Authorised to be used according to |
|---|---|---|
| | **Acetic acid and its salts** | |
| 260 | Acetic acid | https://webgate.ec.europa.eu/foods_system/main/index.cfm?event=substance.view&identifier=82 |
| 261(i) | Potassium acetate | https://webgate.ec.europa.eu/foods_system/main/index.cfm?event=substance.view&identifier=83 |
| 262 | Sodium acetates | https://webgate.ec.europa.eu/foods_system/main/index.cfm?event=substance.view&identifier=84 |
| 263 | Calcium acetate | https://webgate.ec.europa.eu/foods_system/main/index.cfm?event=substance.view&identifier=85 |
| | **Lactic acid and its salts** | |
| 270 | Lactic acid | https://webgate.ec.europa.eu/foods_system/main/index.cfm?event=substance.view&identifier=86 |
| 325 | Sodium lactate | https://webgate.ec.europa.eu/foods_system/main/index.cfm?event=substance.view&identifier=116 |
| 326 | Potassium lactate | https://webgate.ec.europa.eu/foods_system/main/index.cfm?event=substance.view&identifier=117 |
| 327 | Calcium lactate | https://webgate.ec.europa.eu/foods_system/main/index.cfm?event=substance.view&identifier=118 |
| | **Carbon dioxide and carbonates** | |
| 290 | Carbon dioxide | https://webgate.ec.europa.eu/foods_system/main/index.cfm?event=substance.view&identifier=94 |
| 170(i) | Calcium carbonate | https://webgate.ec.europa.eu/foods_system/main/index.cfm?event=substance.view&identifier=39 |
| 500(iii) | Sodium sesquicarbonate | https://webgate.ec.europa.eu/foods_system/main/index.cfm?event=substance.view&identifier=222 |
| 500(i) | Sodium carbonate | https://webgate.ec.europa.eu/foods_system/main/index.cfm?event=substance.view&identifier=224 |

(continued)

| | Carbon dioxide and carbonates | |
|---|---|---|
| 501(i) | Potassium carbonate | https://webgate.ec.europa.eu/foods_system/main/index.cfm?event=substance.view&identifier=222 |
| 503(i) | Ammonium carbonate | https://webgate.ec.europa.eu/foods_system/main/index.cfm?event=substance.view&identifier=223 |
| 503(ii) | Ammonium hydrogen carbonate | https://webgate.ec.europa.eu/foods_system/main/index.cfm?event=substance.view&identifier=223 |
| 504(ii) | Magnesium hydroxide carbonate | https://webgate.ec.europa.eu/foods_system/main/index.cfm?event=substance.view&identifier=224 |
| 504(i) | Magnesium carbonate | https://webgate.ec.europa.eu/foods_system/main/index.cfm?event=substance.view&identifier=224 |
| 501(ii) | Potassium hydrogen carbonate | https://webgate.ec.europa.eu/foods_system/main/index.cfm?event=substance.view&identifier=222 |
| | Phosphoric acids and its salts | |
| 338 | Phosphoric acid | https://webgate.ec.europa.eu/foods_system/main/index.cfm?event=substance.view&identifier=128 |
| 339 | Sodium phosphate | https://webgate.ec.europa.eu/foods_system/main/index.cfm?event=substance.view&identifier=128 |
| 340 | Potassium phosphate | https://webgate.ec.europa.eu/foods_system/main/index.cfm?event=substance.view&identifier=128 |
| 341 | Calcium phospahte | https://webgate.ec.eu ropa.eu/foods_system/main/index.cfm?event=substance.view&identifier=128 |
| 343 | Magnesium phosphate | https://webgate.ec.eu ropa.eu/foods_system/main/index.cfm?event=substance.view&identifier=128 |
| 450 | Diphosphates | https://webgate.ec.europa.eu/foods_system/main/index.cfm?event=substance.view&identifier=128 |
| | Adipic acid and its salts | |
| 355 | Adipic acid | https://webgate.ec.europa.eu/foods_system/main/index.cfm?event=substance.view&identifier=138 |
| 356 | Sodium adipate | https://webgate.ec.europa.eu/foods_system/main/index.cfm?event=substance.view&identifier=138 |
| | Malic acid and its salts | |
| 296 | Malic acid | https://webgate.ec.europa.eu/foods_system/main/index.cfm?event=substance.view&identifier=95 |
| 352(ii) | Calcium malate, D, L- | https://webgate.ec.europa.eu/foods_system/main/index.cfm?event=substance.view&identifier=135 |
| 350(ii) | Sodium DL-malate | https://webgate.ec.europa.eu/foods_system/main/index.cfm?event=substance.view&identifier=133 |
| 350(i) | Sodium hydrogen DL-malate | https://webgate.ec.europa.eu/foods_system/main/index.cfm?event=substance.view&identifier=133 |
| | Citric acid and its salts | |
| 330 | Citric acid | https://webgate.ec.europa.eu/foods_system/main/index.cfm?event=substance.view&identifier=119 |
| 331(i) | Sodium dihydrogen citrate | https://webgate.ec.europa.eu/foods_system/main/index.cfm?event=substance.view&identifier=120 |

(continued)

| | Citric acid and its salts | |
|---|---|---|
| 332(i) | Potassium dihydrogen citrate | https://webgate.ec.europa.eu/foods_system/main/index.cfm?event=substance.view&identifier=121 |
| 333(iii) | Tricalcium citrate | https://webgate.ec.europa.eu/foods_system/main/index.cfm?event=substance.view&identifier=122 |
| 332(ii) | Tripotassium citrate | https://webgate.ec.europa.eu/foods_system/main/index.cfm?event=substance.view&identifier=121 |
| 331(iii) | Trisodium citrate | https://webgate.ec.europa.eu/foods_system/main/index.cfm?event=substance.view&identifier=120 |
| 380 | Triammonium citrate | https://webgate.ec.europa.eu/foods_system/main/index.cfm?event=substance.view&identifier=143 |
| | Sulfuric acids and its salts | |
| 513 | Sulfuric acids | https://webgate.ec.europa.eu/foods_system/main/index.cfm?event=substance.view&identifier=230 |
| 516 | Calcium sulfate | https://webgate.ec.europa.eu/foods_system/main/index.cfm?event=substance.view&identifier=233 |
| 515(i) | Potassium sulfate | https://webgate.ec.europa.eu/foods_system/main/index.cfm?event=substance.view&identifier=232 |
| 514(ii) | Sodium hydrogen sulfate | https://webgate.ec.europa.eu/foods_system/main/index.cfm?event=substance.view&identifier=231 |
| 514(i) | Sodium sulfate | https://webgate.ec.europa.eu/foods_system/main/index.cfm?event=substance.view&identifier=231 |
| | Gluconic acid and its salts | |
| 574 | Gluconic acid | https://webgate.ec.europa.eu/foods_system/main/index.cfm?event=substance.view&identifier=264 |
| 575 | glucono-delta lactone | https://webgate.ec.europa.eu/foods_system/main/index.cfm?event=substance.view&identifier=265 |
| 577 | Potassium gluconate | https://webgate.ec.europa.eu/foods_system/main/index.cfm?event=substance.view&identifier=267 |
| 578 | Calcium gluconate | https://webgate.ec.europa.eu/foods_system/main/index.cfm?event=substance.view&identifier=268 |
| | Sorbic, benzoic and propionic acid and their salts | |
| 200 | Sorbic acid | https://webgate.ec.europa.eu/foods_system/main/index.cfm?event=substance.view&identifier=46 |
| 201 | Sodium sorbate / Sorbic acid sodium salt | https://webgate.ec.europa.eu/foods_system/main/index.cfm?event=substance.view&identifier=46 |
| 202 | Potassium sorbate | https://webgate.ec.europa.eu/foods_system/main/index.cfm?event=substance.view&identifier=46 |
| 203 | Calcium sorbate | https://webgate.ec.europa.eu/foods_system/main/index.cfm?event=substance.view&identifier=46 |
| 210 | Benzoic acid | https://webgate.ec.europa.eu/foods_system/main/index.cfm?event=substance.view&identifier=46 |
| 211 | Sodium benzoate / Benzoic acid sodium salt | https://webgate.ec.europa.eu/foods_system/main/index.cfm?event=substance.view&identifier=46 |

(continued)

| | Sorbic, benzoic and propionic acid and their salts | |
|---|---|---|
| 212 | Potassium benzoate / Benzoic acid potassium salt | https://webgate.ec.europa.eu/foods_system/main/index.cfm?event=substance.view&identifier=46 |
| 213 | Calcium benzoate / Benzoic acid calcium salt | https://webgate.ec.europa.eu/foods_system/main/index.cfm?event=substance.view&identifier=46 |
| 214 | Ethyl 4-hydroxybenzoate | https://webgate.ec.europa.eu/foods_system/main/index.cfm?event=substance.view&identifier=46 |
| 215 | Ethyl 4-hydroxybenzoate sodium salt | https://webgate.ec.europa.eu/foods_system/main/index.cfm?event=substance.view&identifier=46 |
| 216 | Propyl 4-hydroxybenzoate | https://webgate.ec.europa.eu/foods_system/main/index.cfm?event=substance.view&identifier=46 |
| 217 | Sodium salt of E216 | https://webgate.ec.europa.eu/foods_system/main/index.cfm?event=substance.view&identifier=46 |
| 218 | Methyl 4-hydroxybenzoate | https://webgate.ec.europa.eu/foods_system/main/index.cfm?event=substance.view&identifier=46 |
| 219 | Sodium salt of E218 | https://webgate.ec.europa.eu/foods_system/main/index.cfm?event=substance.view&identifier=46 |
| 280 | Propionic acid | https://webgate.ec.europa.eu/foods_system/main/index.cfm?event=substance.view&identifier=87 |
| 281 | Sodium propionate | https://webgate.ec.europa.eu/foods_system/main/index.cfm?event=substance.view&identifier=88 |
| 282 | Calcium propionate | https://webgate.ec.europa.eu/foods_system/main/index.cfm?event=substance.view&identifier=88 |
| 283 | Potassium propionate | https://webgate.ec.europa.eu/foods_system/main/index.cfm?event=substance.view&identifier=88 |
| | Other acids | |
| 334 | Tartaric acid | https://webgate.ec.europa.eu/foods_system/main/index.cfm?event=substance.view&identifier=123 |
| 363 | Succinic acid | https://webgate.ec.europa.eu/foods_system/main/index.cfm?event=substance.view&identifier=142 |
| 297 | Fumaric acid | https://webgate.ec.europa.eu/foods_system/main/index.cfm?event=substance.view&identifier=96 |
| | "Alkalis" | |
| 524 | Sodium hydroxide | https://webgate.ec.europa.eu/foods_system/main/index.cfm?event=substance.view&identifier=224 |
| 525 | Potassium hydroxide | https://webgate.ec.europa.eu/foods_system/main/index.cfm?event=substance.view&identifier=224 |
| 526 | Calcium hydroxide | https://webgate.ec.europa.eu/foods_system/main/index.cfm?event=substance.view&identifier=243 |
| 527 | Ammonium hydroxide | https://webgate.ec.europa.eu/foods_system/main/index.cfm?event=substance.view&identifier=244 |
| 528 | Magnesium hydroxide | https://webgate.ec.europa.eu/foods_system/main/index.cfm?event=substance.view&identifier=245 |
| 529 | Calcium oxide | https://webgate.ec.europa.eu/foods_system/main/index.cfm?event=substance.view&identifier=246 |

(continued)

| | "Alkalis" | |
|---|---|---|
| 530 | Magnesium oxide | https://webgate.ec.europa.eu/foods_system/main/index.cfm?event=substance.view&identifier=247 |
| 300 | Ascorbic acid, L- | https://webgate.ec.europa.eu/foods_system/main/index.cfm?event=substance.view&identifier=97 |
| 301 | Sodium ascorbate | https://webgate.ec.europa.eu/foods_system/main/index.cfm?event=substance.view&identifier=98 |
| 302 | Calcium ascorbate | https://webgate.ec.europa.eu/foods_system/main/index.cfm?event=substance.view&identifier=99 |
| 578 | Calcium gluconate | https://webgate.ec.europa.eu/foods_system/main/index.cfm?event=substance.view&identifier=268 |

The first aspect of the invention relates to a method for providing a spent grain-derived feed or food additive, said method comprising the steps of:

(i) providing moist spent grain;
(ii) adjusting the pH of the spent grain to 4.5 or below, such as a pH in the range of 3.5-4.5, by addition of a pH regulator to provide a pH-adjusted product and/or food additive; and optionally
(iii) packaging said pH-adjusted product to provide a packaged pH-adjusted product and/or food additive; and optionally
(iv) subjecting said moist spent grain, pH-adjusted product, packaged product or food additive to a viable cell count-controlling treatment.

Steps (iii) and (iv) can be optional, thus in some embodiments, the method comprises steps (i), (ii) and (iii). In some embodiments, the method comprises steps (i), (ii) and (iv). In some embodiments, the method comprises steps (i), (ii), (iii) and (iv).
The order of steps (ii), and optional steps (iii) and (iv) can be different: In some embodiments, the order of the steps can be such that step (iv) is performed last. In some embodiments, the order of the steps can be such that step (iii) is performed last. In some embodiments, the order of the steps can be such that step (ii) is performed last.

In some embodiments, two or more steps can be performed simultaneously, or essentially at the same time. In some embodiments, steps (ii) and step (iii) are performed simultaneously, or essentially at the same time. In some embodiments, steps (ii) and step (iv) are performed simultaneously, or essentially at the same time. In some embodiments, step (iii) and step (iv) are performed simultaneously, or essentially at the same time. In some embodiments, steps (ii), (iii) and (iv) are performed simultaneously, or essentially at the same time. "Performed simultaneously" or "essentially at the same time" may e.g. comprise filling a container, e.g. under stirring, and adding a pH-regulator for pH adjustment during said filling process, thus "pH adjustment" (step ii) and "packaging" (step iv) are performed simultaneously or at the same time. Furthermore, if the pH-regulator is or comprises an organic acid or its salt in an active amount, such as lactic acid/lactate, malic acid/malate, acetic acid/acetate, sorbic acid/sorbate, steps (ii), (iii) and (iv) are performed simultaneously or essentially at the same time.

A "conservation step" may thus comprise steps (ii) and/or (iv). "Conservation means" may comprise means for pH regulation, such as a device and/or system for pH measurement and a device and/or system for controlled addition or "dosage" of a pH regulator such as an acid or its salt as disclosed herein. Such devices or systems are believed to be known in the field. "Conservation means" may also comprise means for providing a viable cell count-controlling treatment, such as one or more of heat treatment, removal of $O_2$, packaging under $N_2$ atmosphere, reducing air pressure, addition of one or more microorganism(s) generally recognized as safe (GRAS) and/or freezing, including any combination(s) thereof. Likewise, systems or devices thereto are believed to be known in the field.

In some embodiments, the moist spent grain, pH-adjusted product, and/or said packaged product is subjected to one or more further viable cell count-controlling treatments). Such further viable cell count-controlling treatment(s) or measure(s) may comprise one or more of: heat treatment, pasteurisation, removal of $O_2$; packaging under $N_2$ atmosphere, reducing air pressure, addition of one or more microorganism(s) generally recognized as safe (GRAS) and/or freezing, including any combination(s) thereof. Such treatment is believed to provide an increased shelf life and/or increased microbial safety to the product. In some embodiments, removal of $O_2$ is provided by allowing microorganisms in the spent grain to metabolize the available $O_2$. This process is usually facilitated by an air-tight seal of the container, in which the food additive is packaged.

In some embodiments, the spent grain is fresh, i.e. the spent grain is provided within 1 h after filtration or less, such as within 45 min or less, or within 30 min or less. In some embodiments, the spent grain is provided within 20 min or less, such as within 15 min or less, within 10 min or less. In some embodiments, the spent grain is provided within 5 min or less, 4 min or less, 3 min or less, 2 min or less, or even 1 min or less.

In some embodiments, wherein the spent grain is provided by one or more a continuous solid liquid separation step(s) or by one or more batch solid liquid separation step(s). Suitable solid/liquid separation systems may comprise a lauter tun, and/or filtration systems, such as mash filtration system known in the field. In some embodiments, at least 2 solid/liquid separation steps are performed, such as 2 continuous solid liquid separation steps, 2 batch separation steps, or a combination of a continuous and a batch separation step in any order.

Usually, the spent grain possesses an elevated temperature as a result of the temperature profile used for mashing. In some embodiments, the spent grain has a temperature of at least 40, 45, or 50°C. In some embodiments, the spent grain has a temperature of at least 50, 55°C, 60, 65 or 70°C. A higher temperature is believed to improve microbial safety and/or stability of the food additive. Apart from providing a spent grain with an elevated temperature, it appears advisable to maintain elevated temperatures throughout the different steps and/or unit operations in terms of product quality, including microbial safety, stability and shelf life.

In some embodiments, the spent grain is provided continuously, fresh, and at elevated temperature for one or more of: pH adjustment, packaging and/or subjection to a viable cell-count-controlling treatment.

Without wanting to be bound by any theory it is believed that the use of fresh spent grain improves the quality of the food additive e.g. with respect to microbial safety, especially when the spent grain remains at elevated temperatures throughout processing. In an industrial brewing process, the mash is usually filtered while still hot, thus resulting in a hot filter cake. It can be desirable to remove the spent grain while still hot, preferably in a continuous fashion, such as by using devices and or methods known in the field. Furthermore, maintaining the spent grain at elevated temperatures (e.g. around or at least 40°C; 45°C; or 50°C, 55°C, 60, 65, or 70°C) can make an additional heating step obsolete throughout processing. This is believed to contribute to e.g. one or more of: microbial safety, cost reduction, time saving, energy saving; improved $CO_2$ footprint, and/or product quality.

Commonly, spent grain being the result of a solid/liquid separation of a mash comprises a significant amount of moisture, and/or possesses a high water activity. This, combined with the presence of fermentable carbohydrates can be considered an ideal growth medium for a rich variety of different microorganisms, including spoilage microorganisms which may even include pathogenic microorganisms (see e.g. Examples 18 and 19).

In some embodiments, the spent grain in step (i) has a moisture content of 60-95%, 70-90%, 72-88% or 75-85% (weight/weight); and/or a water activity of 0.98-1.0, 0.985-0.998, or 0.990-0.995, or around 0.992. In some embodiments, the spent grain in step (i) has a moisture content of 20-95%, such as 20-30 %, 30-40%, 40-50%, 50-60%, 60 -70%, 70-80%, 80-90%, 90-95%, or more than 95% (weight/weight). In some embodiments, the spent grain has a moisture content of around 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 %(w/w). In some embodiments, the spent grain has a moisture content of at least 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95 %(w/w). In some embodiments, the spent grain has a water activity of 0.95, 0.96, 0.97, 0.98, 0.99, 0.995, or 0.998 or more. In some embodiments, the spent grain has a water activity in the range of 0.95-0.96, 0.96-0.97, 0.97.0.98, 0.98-0.99, or 0.99-1.0.

According to the first aspect, the pH of the spent grain is adjusted to pH 4.5 or below by the addition of a pH regulator. In some embodiments, the pH is adjusted to 4.4 or below; 4.3 or below; 4.2 or below; 4.1 or below; 4.0 or below; 3.9 or below; 3.8 or below; 3.7 or below; 3.6 or below; or 3.5 or below. Usually, pH is determined including temperature compensation, and represents pH values at a reference temperature, such as 25°C.

The method according to the first aspect includes the addition of one or more pH regulator. It may also be advisable to provide some agitation such as stirring and the like to provide a suitable distribution of the pH regulator(s). In some embodiments, the pH regulator is or comprises one or more of: (i) one or more an organic acid, (ii) one or more salt of an organic acid, (iii) one or more inorganic acid, and/or (iv) one or more salt of an inorganic acid, including any combination thereof. In some embodiments, the pH regulator is or comprises an acid and/or salt of an organic acid as disclosed above, such as in the definition section relating to acids. In some embodiments, the pH regulator is or comprises a compound according to Table III.

In some embodiments, the pH regulator is one or more organic acid(s) selected from: acetic acid, lactic acid, malic acid, tartaric acid, and sorbic acid, including any combination thereof. In some embodiments, the pH regulator is one or more salt(s) of an organic acid(s), such as one or more salt selected from: sodium acetate, potassium acetate, calcium acetate, sodium lactate, potassium lactate, calcium lactate, sodium malate, sodium hydrogen malate, calcium malate, sodium tartrate, potassium tartrate, calcium tartrate, sodium sorbate, potassium sorbate, and calcium sorbate, including any combination thereof. In some embodiments, the pH regulator is or comprises an acid and a salt of an acid, such as an organic acid and a salt of an organic acid. In some embodiments the organic acid and/or the salt of the organic acid is a compound with E number 170(i), 200, 201, 202, 203, 210, 211, 212, 213, 214, 215, 216, 217, 218, 219, 260, 261(i), 262, 263, 270, 280, 281, 282, 283, 290, 296, 297, 300, 301, 302, 325, 326, 327, 330, 331(i), 331(iii), 332(i), 332(ii), 333(iii), 334, 338, 339, 340, 341, 343, 350(i), 350(ii), 352(ii), 355, 356, 363, 380, 450, 500(i), 500(iii), 501(i), 501(ii), 503(i), 503(ii), 504(i), 504(ii), 513, 514(i), 514(ii), 515(i), 516, 524, 525, 526, 527, 528, 529, 530, 574, 575, 577, 578, or 578.

In some embodiments, the pH regulator is or comprises a combination of acetic acid and/or acetate + lactic acid and/or lactate. In some embodiments, the pH regulator is or comprises a combination of acetic acid and/or acetate + malic acid and/or malate. In some embodiments, the pH regulator is or comprises a combination of acetic acid and/or acetate + tartaric acid and/or tartrate. In some embodiments, the pH regulator is or comprises a combination of acetic acid and/or acetate + sorbic acid and/or sorbate.

In some embodiments, the pH regulator is or comprises a combination of lactic acid and/or lactate + malic acid and/or malate. In some embodiments, the pH regulator is or comprises a combination of lactic acid and/or lactate + tartaric acid and/or tartrate. In some embodiments, the pH regulator is or comprises a combination of lactic acid and/or lactate + sorbic acid and/or sorbate.

In some embodiments, the pH regulator is or comprises a combination of malic acid and/or malate + tartaric acid and/or tartrate. In some embodiments, the pH regulator is or comprises a combination of malic acid and/or malate + sorbic acid and/or sorbate. In some embodiments, the pH regulator is or comprises a combination of tartaric acid and/or tartrate + sorbic acid and/or sorbate.

According to the first aspect, the pH-adjusted product may be packaged. This may comprise any packaging known in the field, and may comprise packaging the pH-adjusted spent grain or pH-adjusted food additive in a suitable container, such a tank, tank container, tank truck, semi tank trailer, tank trailer, barrel, air tight big-bag, plastic bag, bottle, Tetra Pak, glass container, aluminium container, or the like. Usually, packaging comprises enclosing the pH-adjusted spent grain or pH-adjusted food additive in a container or covering, which preferably water tight, is sealable and preferably air-tight.

In some embodiments, the packaging size is in the range of 0.1-1 1; 1-100 1; 0.1-1 m$^3$; 1-10 m$^3$; or 10-50 m$^3$. In some embodiments, the container is reusable. In some embodiments, the container is suitable for bulk shipment and/or transport. In some embodiments, the pH-adjusted spent grain is packaged in a tank, such as a tank of a tank truck, which enables simple transport of the food additive to e.g. a manufacturing site of a food product.

As mentioned earlier, one or more further viable cell-count controlling method(s) may be applied. They may be applied or provided for before, during or after packaging. This may include the provision of a GRAS microorganism, such as an acid producing microorganism. A GRAS microorganism can also be any microorganism on the list of qualified presumption of safety (QPS) biological agents intentionally added to food or feed maintained by the European Food Safety Authority (EFSA). Suitable GRAS microorganisms may include lactic acid bacteria (LAB), such as one or more from the genus: Lactobacillus, Pediococcus, Enterococcus, Lactococcus, Leuconostoc, Oenococcus, Streptococcus, Tetragenococcus, Carnobacterium, Vagococcus, Weissella, and Alkalibacterium. In some embodiments, the GRAS microorganism is selected from one or more of: Bacillus, Lactobacillus or Lactococcus. In some embodiments the one or more microorganism is selected from one or more: (i) Lactobacillus, such as one or more of Lactobacillus acidophilus, Lactobacillus amylolyticus, Lactobacillus amylovorans, Lactobacillus animalis, Lactobacillus brevis, Lactobacillus buchneri, Lactobacillus casei, Lactobacillus cellobiosus, Lactobacillus delbrueckii, Lactobacillus diolivorans, Lactobacillus farciminis, Lactobacillus farciminis, Lactobacillus fermentum, Lactobacillus helveticus, Lactobacillus hilgardii, Lactobacillus lactis, Lactobacillus mucosae, Lactobacillus paracasei, Lactobacillus parafarraginis, Lactobacillus pentosus, Lactobacillus plantarum, Lactobacillus reuteri, Lactobacillus paracasei, Lactobacillus sakei, Lactobacillus salivarius, including any combination thereof; (ii) Lactococcus, such as Lactococcus lactis; or (iii) Pediococcus, such as one or more of Pediococcus acidilactici, Pediococcus parvulus, Pediococcus pentosaceus, including any combination thereof. In some embodiments, the GRAS microorganism is one or more microorganism on the list "QPS notification until 2019" with a positive QPS status of the species/family, e.g. accessible at: https://zenodo.org/record/3607184/files/Appendix%20D_2019_%20QPS_notification _until2019.xlsx?download=1.

Contrary to the prior art, where the spent grain is subjected to a drying step to increase shelf life and/or product stability, the method according to the first aspect may not comprise a drying step. Advantages of omitting the drying step comprise one or more of: energy saving, $CO_2$ savings, simplified process design and/or equipment, cost saving, improved organoleptic properties. Thus, according to some embodiments, the method for providing a food additive does not comprise a drying step.

Contrary to the prior art, where the spent grain is subjected to a comminuting step, the method according to the first aspect may not comprise a comminuting step of the spent grain and/or pH-adjusted food additive. Thus, according to some embodiments, the method for providing a food additive does not comprise a comminuting step.

In some embodiments, contrary to the prior art, where the spent grain is subjected to a heating step, the method according to the first aspect may not comprise a heating step of the spent grain and/or pH-adjusted food additive. Instead of a separate heating step, in some embodiments, the temperature of the spent grain is not allowed to drop below a defined temperature, such as not below 40, 45, 50, 55, 60, 65 or 70°C throughout processing. In some embodiments, these temperatures are different from unit operation to unit operation, such as from solid/liquid separation to packaging.

In some embodiments, the food additive has a moisture content comparable to the moisture content of the spent grain. In some embodiments, the food additive has a water activity comparable to the moisture content of the spent grain. In some embodiments, the food additive has a moisture content of 20-60, 60-95%, 70-90%, 72-88% or 75-85% (weight/weight); and/or a water activity of 0.98-1.0, 0.985-0.998, or 0.990-0.995, or around 0.992. In some embodiments, the food additive has a moisture content of around 20-25, 25-30., 30-35, 35-40, 40-45, 45-50, 50-55, or 55-60% (w/w). In some embodiments, the food additive has a moisture content of around 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95% (w/w). In some embodiment, the food additive has a moisture content of at least 20, 25, 30, 35, 40, 45, 50, 55, or 60% (w/w). In some embodiments, the food additive has a moisture content of at least 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, or 95% (w/w). In some embodiments, the food additive has a water activity of 0.95, 0.96, 0.97, 0.98, 0.99, 0.995, or 0.998 or more. In some embodiments, the food additive has a water activity in the range of 0.95-0.96, 0.96-0.97, 0.97.0.98, 0.98-0.99, or 0.99-1.0.

In a second aspect of the invention, a feed or food additive is provided according to the first aspect. This food additive may be packaged, e.g. as disclosed herein.

In some embodiments, the food additive according to any one of the preceding claims, wherein the additive has a shelf life of at least 5 days at room temperature (e.g. 20 or 25°C), and/or at least 10 days under refrigeration (e.g. at 4° C or 7° C). In some embodiments, the food additive may possess a slightly shorter shelf life, such as at least 3 or 4 days at room temperature, and/or at least 5, 6, or 8 days under refrigeration. In some embodiments, the food additive has a longer shelf life, such as at least, 7, 10, 14, 20, 30 days or more at room temperature. In some embodiments, the food additive has a longer shelf life, such as at least 2, 4, 8, 10, or 12 weeks under refrigeration, such as at 7, 10, 14, 20, 30 days or more at room temperature.

In some embodiments, the food additive can be frozen, such as at -20° C or less. In some embodiments, the food additive is used while frozen in the provision of a food product.

In some embodiments, the food additive can be classified as "pathogen-free", "Salmonella-free" and/or "Listeria-free" at the end of the shelf life. In some embodiments, the shelf life includes organoleptic stability, such as one or more of taste, texture, smell, and appearance.

In some embodiments, the food additive is for human consumption. In some embodiments, the food additive is for animal consumption. Different regulations may apply for human food and animal feed, which are known in the field. Without wanting to be bound by any theory, it is believed that the food additives as disclosed herein may comply with such regulations.

In a third aspect, the present invention relates to uses of a feed or food additive according to the first aspect, or provided according to the second aspect in providing a feed or food product.

In some embodiments, food additive is used as a protein replacement or protein supplement in the provision of a food product. In some embodiments, the food additive is used as a fibre replacement or fibre supplement. In some embodiments, the food additive provides both protein- and fibres to the food product.

Furthermore, in some embodiments, the food additive provides increased stability and/or increased shelf life. Without wanting to be bound by any theory, this effect is believed to be caused by the addition of pH-regulators and/or further viable-cell count controlling features, such as the presence of organic acid(s) and/or their salts. In some embodiments, this effect is believed to be related to the "E number(s)" present in the food additive.

In some embodiments, the food product is for human consumption. In some embodiments, the food product is a feed for animal consumption. Without wanting to be bound by any theory, it is believed that the use of food additives as disclosed herein may comply with regulations for animal feed and/or human food.

Concerning the use of spent from different brewing processes, such as comprising different types of malt as e.g. disclosed above, the food additive may taste differently and thus provide different tastes to the food product, such as a smoked flavour, which could be desirable in some meat- or meat analogue-comprising products. Likewise, different types of spent grain can provide other organoleptic properties.

In a fourth aspect, the present invention concerns to a food or feed product comprising e.g. 0.1-99.9% of a feed or food additive according to the first or second aspect. In some embodiments, the food product comprises 0.1-1%, 1-2%, 2-5%, 5-10%, 10-20%, 20-40%, 40-60%, 60-80%, 80-90%, or 90-99.9% of the food additive.

In some embodiments, the food product is a meat product, such as sausage, bread, or a cooked or baked product. In some embodiments, the food product is selected from one or more of: snacks, in particular cereal bar and/or snack bars, wherein the snack e.g. may be pressed, fried and/or toasted; baked product; bakery product, in particular bread, crispbread, pastry; and waffle(s), cookie; patisserie product, e.g. cake; breakfast cereal; sauce; beverage, such as instant drink, smoothie; pasta; paste; spread; filling; and product comprising ground meat or meat-analogue, such as sausage, cured sausage, meat dough; soup; and instant food.

In some embodiments, the food product can be classified as one or more of: vegan, vegetarian, and/or organic, including any combination thereof.

In some embodiments, the food additive is believed to provide a pro-and/or pre-biotic effect.

In some embodiments of the invention, the food additive can be used directly as human food or animal feed. In some embodiments, the food additive is suitable for immediate (i.e. without incorporation in a food product) consumption by a subject (human or animal).

In a fifth aspect, the present invention concerns a system for providing a feed or food additive according to the first or second aspect. In particular, such a system may comprise:

> x. solid/liquid separation means (20) such as a lauter tun or mash filtration system for providing a moist spent grain from a mash;
> y. conservation means (50) for contacting the moist spent grain with at least one conservation agent (51, 52), said conservation means comprising pH adjusting means for providing pH-adjusted moist spent grain, comprising e.g.:
>
>> (i) a pH monitoring device, such as pH meter
>> (ii) a dosage device for addition of one or more conservation agents (51, 52),
>> (iii) and optionally stirring means (58) such as a mixer for mixing the moist spent grain;
>> and optionally
>
> z. packaging means (70) such as a filling system for packaging the pH-adjusted and/or conserved spent grain in a sealable container and/or tank.

The spent grain can be provided by the use of mashing means (10) from a cereal, preferably a malted cereal such as barley malt. The person skilled in the art would know how to choose the suitable mashing means (10). In some embodiments, the spent grain is provided from an industrial scale brewing process, such as a large scale brewing process.

In some embodiments said system comprises one or more transportation means such as a pipe and pumping means (40) such as an auger or pneumatic pump for transporting said moist spent grain, such as from one unit operation to the next one, such as from one solid/liquid separation means to the conservation means and/or the packaging means, as well as one or more flow regulation means (41, 42, 43, 44, 45, 46, 47, 48), such as valves or other systems or devices customary in the field.

In some embodiments, the pH adjusting means comprise stirring means (58) such as a mixer or the like for providing a mixing of the spent grain for providing a better distribution of one or more agents, such as pH regulator and/or conservation agent. A result of the mixing can also be a uniform pH in the food additive. Suitable pH measuring systems and/or devices are known in the field, such as pH-meter, pH-electrode or spectroscopy based devices. Said pH measurement can be a direct measurement, or an indirect pH measurement, such as pH predictions by the use of spectroscopy, such as NIR, IR, FT-NIR or FT-IR spectroscopy, in combination with multivariate data analysis.

In some embodiments, the packaging means (70) are adapted to provide an air-tight packaging and/or packaging under protected atmosphere, such as $N_2$. Suitable packaging means can e.g. be a dispensing, filling or bottling station customary in the field. The packaging means (70) may include a pump for removal of oxygen. The packaging means (70) may include a $N_2$-source for displace the oxygen with $N_2$. Thereby, the resulting package is isolated from the ambient atmosphere and placed in an inert atmosphere. The packaging means (70) may comprise a conveyor or the like transporting the material to a container.

In some embodiments, the system may comprise further viable cell count-controlling means adapted to provide a viable cell count controlling treatment, such as one or more of heating system or device for heat treatment, such as a pasteurisation device known in the field. In some embodiments, the system comprises an air and/or $O_2$ removal or replacement system like a vacuum pump, or a device or system for replacing air with a protective atmosphere, such as with a $N_2$ atmosphere, as described herein, which is believed to be customary in the field of e.g. packaging. In some embodiments, a vacuum pump or system is used for reducing air pressure. In some embodiments, a dosage system for provision of one or more microorganism(s) is provided for. Microorganisms can be provided as freeze-dried powder, or suspended in an aqueous medium, and devices and systems thereto are customary in the field.

In some embodiments, the system is adapted to provide and/or maintain, when in operation, a defined temperature of the moist spent grain. This can e.g. be at least 40, 45, 50, 55, 60, 65 or 70°C from the solid/liquid separation means to the conservation means and/or and packaging means or any other unit operation. This can e.g. be achieved by insulation, or heating, such as by the use of hot water and/or steam. In some embodiments, heat sensors are used to determine or assess the heat of the spent at various stages from filtration to packaging, transport and/or storage.

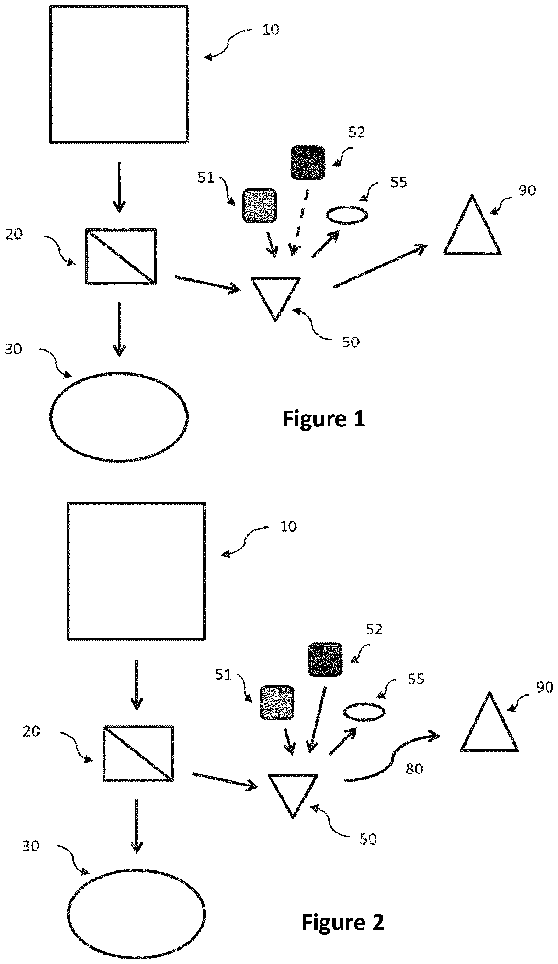

Further embodiments of the system according to the firth aspect are e.g. disclosed in Figures 1-8. Generally, unless indicated otherwise or obviously wrong, means and/or functions disclosed in one figure may also be present in any other figure.

Fig. 1 illustrating a system comprising mashing means (10) for providing a mash from malt such as barley malt, optionally comprising other cereals, and filtration means (20) for separating the spent grains from the liquid fraction (the wort) which can be processed further by e.g. by fermentation means (30). The fermentation means (30) means are not necessarily an essential part of system. The spent grain are subjected to conservation step comprising conservation means (50) to provide the food additive as disclosed herein. The conservation means (50) may comprise means for dosing one or more conservation agents (51, 52), such as one or more pH regulator(s) and/or one or more microbial strain. The conservation means (50) may comprise pH measuring means. The conservation means may also comprise means for removing $O_2$ (55). This can e.g. be achieved by replacing air such as in the head space with $N_2$ as disclosed herein. The system may comprise packaging means (70), which are not depicted here. The food provision means (90), such as a food-processing factory, are not necessarily an essential part of the system and are thus not described in detail. The means for dosing may be a valve. The valve may be computer controlled.

**Fig. 2** illustrates a system similar to the one disclosed in **Fig. 1,** apart from a transporting step comprising transporting means (80), such as truck transporting the packaged food additive to a food production site (90). In one embodiment of the invention, the food additive is packaged by transferring the spent grain to a container, such as a tank of a tank truck. Conservation step(s) (50) may at least in part be performed in the container, such as in the tank of a tank truck, e.g. by addition of one or more conservation agent (50, 51), and/or removal of $O_2$ by means or methods as disclosed herein.

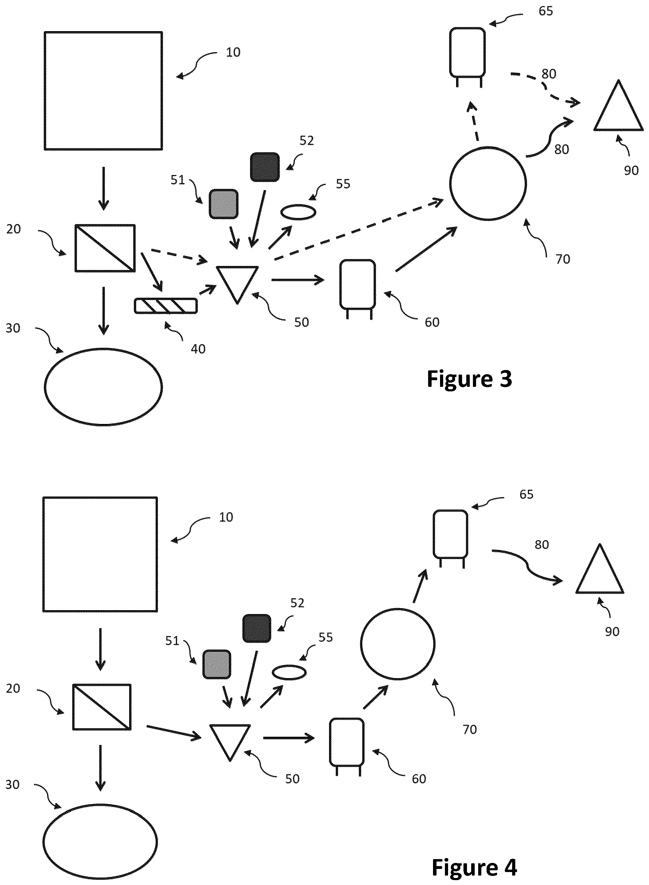

**Figs. 3** and **4** illustrate further embodiments of a system as shown in **Figs. 1 and 2.** In particular, pumping means (40) are shown to transport the spent grain from the filtration means (20) to the site (50) where one or more conservation steps are provided (50). After addition of the one or more pH regulator (51, 52) and/or removal of $O_2$, a first storage means (60) provides storage of the food additive before subjecting to packaging by the use of packaging means (70). After packaging, optional further storage means (65) provide storage after packaging before transporting (80) the packaged food additive to the food provision means (90). Pumping means (40), although not shown in **Fig 4** may be present. The first and second storage means (60,65) may be a first and a second container or similar storage.

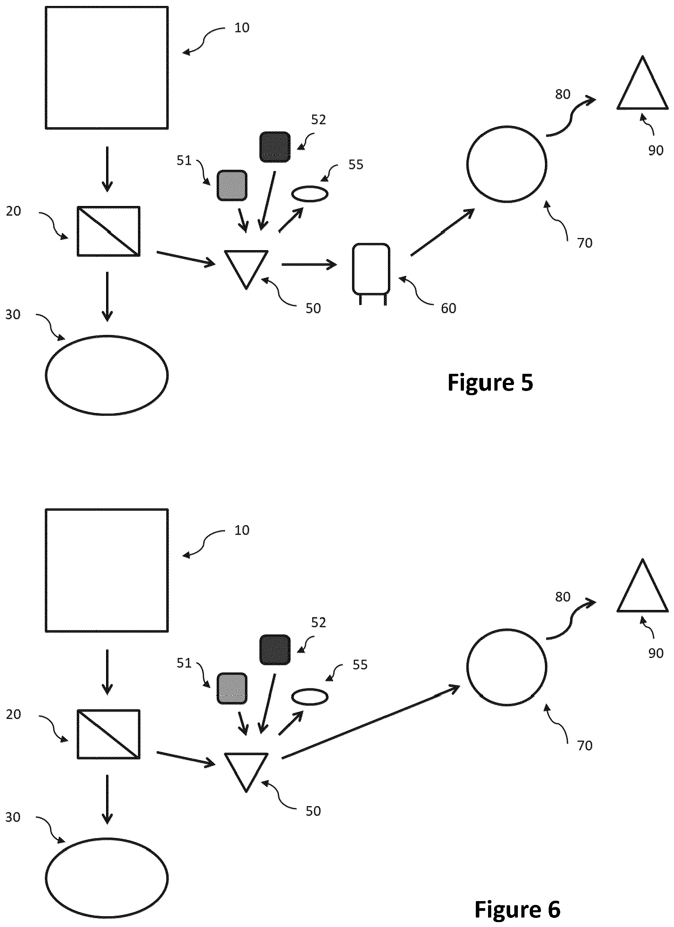

**Figs.** 5 and 6 illustrate further embodiments of a system as shown e.g. in **Fig. 3.** In Fig. 5, an embodiment is shown where the pH adjusted food additive is stored in storage means (60) after the conservation step (50) and before packaging (70) and transporting (80). In **Fig 6,** an embodiment is shown where the pH adjusted food additive is packaged directly after conservation using conservation means (50), such as in a tank, tank container, tank truck or the likes as described earlier, and transported to the food provision means.

**Figs. 7** and **8** illustrate further embodiments of a system according to the present invention. Fig. 7 illustrates a system, where the spent grain is provided by filtration (20) of a mash provided in a mashing tank (10), which is then pumped by pumping means (40) either to a storage means/tank (60) or to conservation means (50). The flow of spent grain to either storage means (60) or conservation means (50) can be controlled by flow regulation means (41, 42), such as valves. Conservation means comprise storage means (51, 52) for a 1st and/or a 2nd conservation agent, such as a first and pH regulator as disclosed herein, and mixing means (58) for facilitating pH adjustment and/or conservation. The food additive is then packaged using packaging means (70). This may be a container, tank or tank truck or the like. **Fig. 8** shows a further connection between storage means (60) and conservation means (50), controllable by a further flow regulation means (46). Furthermore, additional flow regulation means (43, 44, 45, 47, 48) are shown. The mixing means (58) can be a mixer.

Generally, with respect to the embodiments illustrated and described herein, one or more further pumping means (40) may be present in a system according to the present invention. Pumping means may also comprise one or more pump(s), the use of gravity, air pressure, and/or other known pumping and/or transportation means suitable for transporting the spent grain, wort, food additive, pH regulator, etc. Likewise, one or more flow regulation means, such as valves (41-48) may be present for controlling the flow of spent grain, wort, food additive, pH regulator, etc. Instead of, or combined with, the flow regulation means, pumping means can be used as well. Often, pumping means and/or flow regulating means are provided between different unit operations. Furthermore, with respect to the conservation means (50), in some embodiments they are a container or vessel, wherein the spent grain is contacted with a pH regulator. Often, pH measuring means are provided as well, often in combination with as dosage means for dosing the one or more pH regulator, and/or in order to achieve a pre-set pH value. In some embodiments, means for removal or replacing oxygen, such as by nitrogen may be provided. In some embodiments, mixing means (58) are provided. This can be a simple stirring device or pump, or other suitable systems in the art for mixing a product of similar viscosity as moist spent grain.

As disclosed herein, the system may comprise one or more pipe(s) for transporting spent grain to a storage device (60) for storing spent grain, and one or more pipe(s) for transporting spent grain to conservation means (50), wherein the flow of spent grain can be directed to the storage device or the conservation means by one or more flow regulating means (41, 42). In some embodiments, the system comprises a pipe for transporting spent grain from the storage device (60) to the conservation means (50), and optionally comprising a flow regulating means (46) for regulating the flow of spent grain from the storage device (60) to the conservation means (50).

In some embodiments, the solid/liquid separation means (20) comprises two filtration units in series, wherein, when in operation, the first unit is adapted to provide moist spent grain with a first water content, such as a water content of around at least 60, 70, 80, 85% or more (w/w) and the second filtration provides a moist spent grain with a second water content, such as at least 20, 30, 40, 50, or 60%. Usually, the first water content is higher than second water content. It is believed that such a two-step filtration system can be advantageous for providing spent grain with a lower water content.

The inventors have realised, that an existing brewing system can be modified to allow for the provision of a spent grain-derived food additive. In large, this modification and/or adaptation can be performed using conventional components, materials, and/or equipment. Thus in a further aspect of the invention relates to the modification of an existing brewing system by incorporation a system according to the fifth aspect as disclosed herein.

In a sixth aspect, the present invention pertains to a computer program product comprising software code portions configured for, when run in the memory of a computer, executing the method according to the first aspect, and/or controlling the system according to the fifth aspect.

Further details and/or embodiments relating to the present invention can e.g. be found in the following "List of numbered embodiments" as well as "Examples".

**List of numbered embodiments**

1. A method for providing a spent grain-derived food additive, said method comprising the steps of:

(a) providing moist spent grain;
(b) adjusting the pH of the spent grain to 4.5 or below, such as a pH in the range of 3.5-4.5, by addition of a pH regulator to provide a pH-adjusted product and/or food additive.

2. A method according to embodiment 1, further comprising the step:
(c) packaging said pH-adjusted product to provide a packaged pH-adjusted product and/or food additive.
3. A method according to embodiment 1 or 2, further comprising the step:
(d) subjecting said moist spent grain, pH-adjusted product, packaged product or food additive to a viable cell count-controlling treatment.
4. A method according to any one of the preceding embodiments, wherein the moist spent grain has a water content of at least 20, 30, 40, 50, 60, 70, 80, 85% (w/w) or more.
5. A method according to any one of the preceding embodiments, wherein the moist spent grain has a water content of at least 60, 70, 80, 85% (w/w) or more.
6. A method according to any one of the preceding embodiments, wherein the spent grain is fresh, i.e. the spent grain is provided within 1, 2, 3, 4, 5, 7, 10 or 15 min after wort separation or less; or wherein the spent grain is provided within 10, 15, 20, 30, 45 or 60 min after wort separation or less.
7. A method according to any one of the preceding embodiments, wherein the spent grain is provided by one or more a continuous solid liquid separation step(s) or by one or more batch solid liquid separation step(s).
8. The method according to embodiment 7, comprising 2 solid liquid separation steps, such as 2 continuous solid liquid separation steps, 2 batch separation steps, or a combination of a continuous and a batch separation step in any order.
9. A method according to any one of the preceding embodiments, wherein the spent grain has a temperature of at least 40°C; 45°C; or 50°C.
10. A method according to any one of the preceding embodiments, wherein the spent grain has a temperature of at least 50°C; 55°C, 60°C, 65°C; or 70°C.
11. A method according to any one of the preceding embodiments, wherein said spent grain has a moisture content of 60-95%, 70-90%, 72-88% or 75-85% (weight/weight); and/or a moisture content of 20-95%, 20-30%, 30-40%, 40-50%, 50-60%, 60-80%, or 80-95% (w/w).
12. A method according to any one of the preceding embodiments, wherein said spent grain has a water activity of 0.98-1.0, 0.985-0.998, or 0.990-0.995, or around 0.992.
13. A method according to any one of the preceding embodiments, wherein the pH is adjusted to 4.4 or below; 4.3 or below; 4.2 or below; 4.1 or below; 4.0 or below; 3.9 or below; 3.8 or below; 3.7 or below; 3.6 or below; or 3.5 or below.
14. A method according to any one of the preceding embodiments, wherein the pH regulator is or comprises one or more of: (i) one or more an organic acid, (ii) one or more salt of an organic acid, (iii) one or more inorganic acid, and/or (iv) one or more salt of an inorganic acid; including any combination(s) thereof.
15. A method according to embodiment 14, wherein the organic acid(s) is/are selected from: acetic acid, lactic acid, malic acid, tartaric acid, and sorbic acid, including any combination thereof; and/or wherein the salt(s) of the organic acid(s) is/are selected from: sodium acetate, potassium acetate, calcium acetate, sodium lactate, potassium lactate, calcium lactate, sodium malate, sodium hydrogen malate, calcium malate, sodium tartrate, potassium tartrate, calcium tartrate, sodium sorbate, potassium sorbate, and calcium sorbate, including any combination thereof.

16. A method according to any one of embodiment 14 or 15, wherein the organic acid and/or the salt of the organic acid is a compound with E number 170(i), 200, 201, 202, 203, 210, 211, 212, 213, 214, 215, 216, 217, 218, 219, 260, 261(i), 262, 263, 270, 280, 281, 282, 283, 290, 296, 297, 300, 301, 302, 325, 326, 327, 330, 331(i), 331(iii), 332(i), 332(ii), 333(iii), 334, 338, 339, 340, 341, 343, 350(i), 350(ii), 352(ii), 355, 356, 363, 380, 450, 500(i), 500(iii), 501(i), 501(ii), 503(i), 503(ii), 504(i), 504(ii), 513, 514(i), 514(ii), 515(i), 516, 524, 525, 526, 527, 528, 529, 530, 574, 575, 577, 578, or 578.

17. A method according to any one of the preceding embodiments, wherein the pH-adjusted product is packaged in a sealable container, such a tank container, tank truck, semi tank trailer, tank trailer, barrel, air tight big-bag, plastic bag, Tetra Pak, glass container, metal container, aluminium container, barrel, or tin can.

18. A method according to any one of the preceding embodiments, wherein packaging size is in the range of 0.1-1 1; 1-100 1; 0.1-1 m$^3$; 1-10 m$^3$; or 10-50 m$^3$.

19. A method according to any one of the preceding embodiments, wherein viable cell count-reducing treatment comprises one or more of: heat treatment, pasteurisation, removal of O$_2$; packaging under N$_2$ atmosphere, reducing air pressure, addition of one or more microorganism(s) generally recognized as safe (GRAS) and/or possessing a positive QPS status on the list "QPS notification until 2019".

20. A method according to embodiment 19, wherein the GRAS microorganism is an acid producing microorganism, such as lactic acid bacteria, e.g. from the genus: Lactobacillus, Pediococcus, Enterococcus, Lactococcus, Leuconostoc, Oenococcus, Streptococcus, Tetragenococcus, Carnobacterium, Vagococcus, Weissella, and Alkalibacterium.

21. A method according to embodiment 19 or 20, wherein the microorganism is selected from one or more: (i) Lactobacillus, such as one or more of Lactobacillus acidophilus, Lactobacillus amylolyticus, Lactobacillus amylovorans, Lactobacillus animalis, Lactobacillus brevis, Lactobacillus buchneri, Lactobacillus casei, Lactobacillus cellobiosus, Lactobacillus delbrueckii, Lactobacillus diolivorans, Lactobacillus farciminis, Lactobacillus farciminis, Lactobacillus fermentum, Lactobacillus helveticus, Lactobacillus hilgardii, Lactobacillus lactis, Lactobacillus mucosae, Lactobacillus paracasei, Lactobacillus parafarraginis, Lactobacillus pentosus, Lactobacillus plantarum, Lactobacillus reuteri, Lactobacillus paracasei, Lactobacillus sakei, Lactobacillus salivarius, including any combination thereof; (ii) Lactococcus, such as Lactococcus lactis; or (iii) Pediococcus, such as one or more of Pediococcus acidilactici, Pediococcus parvulus, Pediococcus pentosaceus, including any combination thereof.

22. A method according to any one of the preceding embodiments, wherein said method does not comprise a drying step.

23. A method according to any one of the preceding embodiments, wherein said method does not comprise a comminuting step.

24. A method according to any one of the preceding embodiments, wherein the food additive has a moisture content of 60-95%, 70-90%, 72-88% or around 75-85% (weight/weight); or a moisture content of 20-85%, 20-30%, 30-40 %, 40-50%, 50-60%, 60-80%, or 80-95% (w/w); and/or a water activity of 0.98-1.0, 0.985-0.998, or 0.990-0.995, or around 0.992.

25. A food additive provided according to any one of the preceding steps.

26. A food additive according to any one of the preceding embodiments, wherein the additive has a shelf life at room temperature of at least 3, 4, 5, 7, 10, 14, 20 or 30 days at room temperature (e.g. 20-25°C, such as 20 or 25°C), and/or at least 5, 6, 8 10 days or 1, 2, 4, 6 12 weeks under refrigeration (e.g. ~4-7°C, such as 4°C or 7°C)

27. A food additive according to according to any one of the preceding embodiments, wherein the additive can be classified as "pathogen-free", such as "Salmonella-free" and/or "Listeria-free" at the end of the shelf life.

28. A food additive according to embodiment 25 or 26, wherein the shelf life includes organoleptic stability, such as one or more of taste, texture, smell, and appearance.

29. A food additive according to any one of the preceding embodiments, wherein the additive is for human or animal consumption.

30. A food product according to any one of the preceding embodiments, wherein the food additive is suitable for immediate consumption by a subject.

31. Use of moist spent grain-derived food additive according to any one of the preceding embodiments in the provision of a food product.

32. Use according to embodiment 31, wherein the food additive is used as a protein replacement or protein supplement; and/or as a fibre replacement or fibre supplement.

33. Use according to embodiment 31 or 32, wherein the food product is for human consumption.

34. Use according to embodiment 31 or 32, wherein the food product is a feed product for animal consumption.

35. A food product comprising 0.1-99.9% (w/w) of a food additive according to any one of embodiments 1-30.

36. A food product according to embodiment 35, wherein the food product is selected from one or more of snacks, in particular cereal bar and/or snack bars, wherein the snack e.g. may be pressed, fried and/or toasted; baked product; bakery product, in particular bread, crispbread, pastry; and waffle(s), cookie; patisserie product, e.g. cake; breakfast cereal; sauce; beverage, such as instant drink, smoothie; pasta; paste; spread; filling; and product comprising ground meat or meat-analogue, such sausage, cured sausage and meat dough; soup and instant food.

37. A food product according to embodiment 35 or 36, wherein the food product can be classified as one or more of: vegan, vegetarian, and/or organic, including any combination thereof.

38. A food product according to any one of embodiments 35-37, wherein the food additive provides a stabilizing effect.

39. A food product according to any one of embodiments 35-38, wherein the food additive provides a pro-and/or pre-biotic effect.

40. A feed product comprising 0.1-99.9% (w/w) of a food additive according to any one of embodiments 1-30.

41. A system for providing a feed or food additive according to anyone of embodiments 1-30, comprising:

    a. solid/liquid separation means (20) such as a lauter tun or mash filtration system for providing a moist spent grain from a mash;
    b. conservation means (50) for contacting the moist spent grain with at least one conservation agent (51, 52), said conservation means comprising pH adjusting means for providing pH-adjusted moist spent grain, comprising e.g.:

        (i) a pH monitoring device, such as pH meter
        (ii) a dosage device for addition of one or more conservation agents (51, 52),
        (iii) and optionally stirring means (58) such as a mixer for mixing the moist spent grain;
        and optionally

    c. packaging means (70) such as a filling system for packaging the pH-adjusted and/or conserved spent grain in a sealable container and/or tank.

42. A system according to embodiment 41, further comprising one or more transportation means such as a pipe and pumping means (40) such as an auger or pneumatic pump for transporting said moist spent grain from the solid/liquid separation means to the conservation means and/or the packaging means, as well as one or more flow regulation means (41, 42, 43, 44, 45, 46, 47, 48), such as valves.

43. A system according to embodiment 42, wherein the packaging means (70) is adapted to provide an air-tight packaging, optionally under protected atmosphere, such as $N_2$.

44. A system according to embodiments 41-43, further comprising viable cell count-controlling means adapted to provide a viable cell count controlling treatment, such as one or more of heat treatment, pasteurisation, removal of $O_2$, packaging under $N_2$ atmosphere, reducing air pressure, and/or provision of one or more microbial strains.

45. A system according to embodiments 41-44, adapted to provide and/or to maintain, when in operation, a temperature of the moist spent grain of at least 40, 45, 50, 55, 60, 65 or 70°C from the solid/liquid separation means to the conservation means and/or and packaging means.

46. A system for providing a feed or food additive according to any one of embodiments 1-30 as disclosed in any one of Figures 1-8.

47. A system according to any one of embodiments 41-46, further comprising one or more pipe(s) for transporting spent grain to a storage device (60) for storing spent grain, and one or more pipe(s) for transporting spent grain to conservation means (50), wherein the flow of spent grain can be directed to the storage device or the conservation means by one or more flow regulating means (41, 42).

48. A system according to embodiment 47, further comprising a pipe for transporting spent grain from the storage device (60) to the conservation means (50), and optionally comprising a flow regulating means (46) for regulating the flow of spent grain from the storage device (60) to the conservation means (50).

49. A system according to any one of embodiments 41-49, wherein the solid/liquid separation means (20) comprises two filtration units in series, wherein, when in operation, the first unit is adapted to provide moist spent grain with a first water content, such as a water content of around at least 60, 70, 80, 85% or more (w/w) and the second filtration provides a moist spent grain with a second water content, such as at least 20, 30, 40, 50, or 60%, wherein the first water content is higher than second water content.

50. Modification of a brewing system by incorporating the system according to any one of embodiments 41-49.

51. A computer program product comprising software code portions configured for, when run in the memory of a computer, executing the method according to any one of embodiments 1-30, and/or controlling the system according to any one of embodiments 41-49.

**EXAMPLES**

**Example 1** - **Provision of spent grain**

Spent grain samples are harvested after mashing from industrial-scale brewing processes for different beer type and production methods. The spent grain is harvested without delay while still hot (around 50-60 °C).

**Example 2** - **Analysis of water/moisture content and/or dry matter**

Water content: ISO 712 4th edition 2009-11-15 Principle: The sample is dried at 130°C until stable and the loss of weight is determined by weighing.

**Example 3** - **Analysis of water activity**

NMKL 168.
Principle: Water activity ($a_w$) is a measure of the proportion of water in a sample that is available for microbiological growth. It describes the relative air humidity of the enclosed sample after equilibrium with respect to temperature and humidity are achieved. The water activity is influenced by the sample's composition, temperature and water content and can be defined as:

$$a_w = p/p_0$$

where p is the equilibrium water vapour pressure over the foodstuff and p0 is the saturated vapour pressure over deionised water at the same temperature. The water activity can therefore also be defined as:

$$a_w = ERH/100$$

where ERH is the equilibrium of relative humidity.

**Example 4 - pH measurement**

NMKL 179.
Principle: pH is defined as the negative log of the concentration of H+ ions (pH = - log [H+]). The pH of the sample is measured, measuring the potential between a pH selective electrode and a reference electrode after calibration using buffers with a known pH. Temperature compensation, preferably automatic temperature compensation is used if needed, using 25°C as reference temperature.

**Example 5** - **Microbial analysis**

Bacillus cereus ISO 7932

Principle: Presumptive Bacillus cereus is enumerated on the surface of a selective and differential media.

Clostridium botulinum ISO 17919

Principle: A horizontal method for the molecular detection of clostridia carrying botulinum neurotoxin A, B, E and F genes - which are the types pathogenic to humans - by real-time PCR.

Salmonella NMKL 71

Principle: Salmonella is enumerated on the surface of a selective and differential media after pre enrichment and enrichment in non and selective media.

Staphylococcus aureus ISO 6888-1

Principle: Staphylococcus aureus is enumerated on the surface of a selective and differential media.

Pathogenic E. coli ISO 16649-2

Principle: E. coli is enumerated using a colony-count technique at 44 °C on a solid medium, containing a chromogenic ingredient for detection of the enzyme - glucuronidase. β-glucuronidase-positive Escherichia coli grow with typical blue colonies.

Total count 30°C: ISO 4833

Principle: The total number of bacteria grown at 30°C is enumerated using a non-selective media.

Yeast and mould: NMKL 98 mod.

Principle: Yeast and mould is enumerated on the surface of a selective and differential media.

Sulphur-reducing Bacteria ISO 15213

Principle: Anaerobic sulphite-reducing bacteria are detected and enumerated on iron-sulphite agar, where they form typical black-coloured colonies. The black colour of the colonies and the surrounding zone is due to the formation of iron(II) sulphide as a result of the reaction between sulfide ions and trivalent iron [Fe(III)] present in the medium.

Aerobic and anaerobic spores NMKL 189

Principle: Aerobic and anaerobic spores are enumerated on a non-selective media after heat treatment of the sample in order to kill all vegetative cells. The samples are incubated under both aerobic and anaerobic conditions.

**Example 6 - Organoleptic analysis**

NMKL procedure 6, ISO 8585, ISO 8586

Principle: Evaluation of the organoleptic quality of food by assessing the different characteristics based on the basics taste sweet, sour, salt, and bitter. The organoleptic characteristics are assessed against normal characteristics for the samples.

**Example 7**

Stability analysis

Samples are provided in air tight container with minimal head space and stored refrigerated (4 or 7°C) and at room temperature (20 or 25°C) and are analysed at regular intervals until spoiled e.g. according to Example 5 - microbial analysis and/or Example 6 - organoleptic analysis. If needed, head space can be replaced with $N_2$.

**Example 8**

Provision of stock solutions

Stock solutions of inorganic and organic acids and salts are prepared according to standard laboratory methods. Depending on sample size as, desired pH as well as buffer capacity of the samples, e.g. 1M stock solution can used directly or diluted accordingly if needed to facilitate accurate titration.

**Example 9**

Titration

Titration and/or addition of different acids/salts for pH adjustment is performed under agitation using conventional laboratory equipment. Care is taken to avoid microbial contamination.
Generally, samples are not allowed to cool below 40°C.

**Example 10**

Provision of moist spent grain **sample A**

Spent grain is provided according to Example 1 from an all malt pilsner brewing process without sparging. Different parameters are analysed according to Examples 2-6.

**Example 11**

Provision of moist spent grain **sample B**

= Example 10 + sparging (i.e. washing the filter cake with water to extract additional sugars)

**Example 12**

Provision of moist spent grain **sample C**

= Example 10, but from a high gravity brewing process

**Example 13**

Provision of moist spent grain **sample D**

= Example 10, but brewed according to "Reinheitgebot".

**Example 14**

Provision of moist spent grain **sample E**

= Example 10, but brewed using malt and adjunct.

**Example 15**

*Provision of different food additives (FA1-35) using a single pH regulator*

| FA # | Sample | pH adjusted to: a / b / c | Inorganic acid | Acetic acid/ salt | Lactic acid/ salt | Malic acid/salt | Tartaric acid/salt | Sorbic acid/salt |
|---|---|---|---|---|---|---|---|---|
| 1 | A | none | none | none | none | none | none | none |
| 2 | A | 4.5/4.0/3.8 | x | none | none | none | none | none |
| 3 | A | 4.5/4.0/3.8 | none | x | none | none | none | none |
| 4 | A | 4.5/4.0/3.8 | none | none | x | none | none | none |
| 5 | A | 4.5/4.0/3.8 | none | none | none | x | none | none |
| 6 | A | 4.5/4.0/3.8 | none | none | none | none | x | none |
| 7 | A | 4.5/4.0/3.8 | none | none | none | none | none | x |
| 8 | B | none | none | none | none | none | none | none |
| 9 | B | 4.5/4.0/3.8 | x | none | none | none | none | none |
| 10 | B | 4.5/4.0/3.8 | none | x | none | none | none | none |
| 11 | B | 4.5/4.0/3.8 | none | none | x | none | none | none |
| 12 | B | 4.5/4.0/3.8 | none | none | none | x | none | none |

(continued)

| FA # | Sample | pH adjusted to: a / b / c | Inorganic acid | Acetic acid/ salt | Lactic acid/ salt | Malic acid/salt | Tartaric acid/salt | Sorbic acid/salt |
|---|---|---|---|---|---|---|---|---|
| 13 | B | 4.5/4.0/3.8 | none | none | none | none | x | none |
| 14 | B | 4.5/4.0/3.8 | none | none | none | none | none | x |
| 15 | C | none | none | none | none | none | none | none |
| 16 | C | 4.5/4.0/3.8 | x | none | none | none | none | none |
| 17 | C | 4.5/4.0/3.8 | none | x | none | none | none | none |
| 18 | C | 4.5/4.0/3.8 | none | none | x | none | none | none |
| 19 | C | 4.5/4.0/3.8 | none | none | none | x | none | none |
| 20 | C | 4.5/4.0/3.8 | none | none | none | none | x | none |
| 21 | C | 4.5/4.0/3.8 | none | none | none | none | none | x |
| 22 | D | none | none | none | none | none | none | none |
| 23 | D | 4.5/4.0/3.8 | x | none | none | none | none | none |
| 24 | D | 4.5/4.0/3.8 | none | x | none | none | none | none |
| 25 | D | 4.5/4.0/3.8 | none | none | x | none | none | none |
| 26 | D | 4.5/4.0/3.8 | none | none | none | x | none | none |
| 27 | D | 4.5/4.0/3.8 | none | none | none | none | x | none |
| 28 | D | 4.5/4.0/3.8 | none | none | none | none | none | x |
| 29 | E | none | none | none | none | none | none | none |
| 30 | E | 4.5/4.0/3.8 | x | none | none | none | none | none |
| 31 | E | 4.5/4.0/3.8 | none | x | none | none | none | none |
| 32 | E | 4.5/4.0/3.8 | none | none | x | none | none | none |
| 33 | E | 4.5/4.0/3.8 | none | none | none | x | none | none |
| 34 | E | 4.5/4.0/3.8 | none | none | none | none | x | none |
| 35 | E | 4.5/4.0/3.8 | none | none | none | none | none | x |

*none: compound not added*
*x: compound added*

Stability analysis is performed according to Example 7.

Use of an organic acid for reducing pH has a stronger antimicrobial effect than reducing to the same pH using an inorganic acid as e.g. HCl. It is believed that this is due to the combined antimicrobial effect of the lower pH and the direct antimicrobial effect of the undissociated organic acid.

The proportion of undissociated organic acid is inversely proportional to pH: the lower the pH, the higher proportion of the organic acid is in the undissociated form. Generally, the lower the pH, the larger the added benefit of using an organic acid relative to using an inorganic acid.

**Example 16**

*Provision of different food additives (FA101-138) using two pH regulators*

| FA# | spent grain sample | pH adjusted to: a/b | Inorganic acid | Acetic acid/salt | Lactic acid/salt | Malic acid/salt | Tartaric acid/salt | Sorbic acid/salt |
|---|---|---|---|---|---|---|---|---|
| 101 | A | 4.5/4.0 | x | x | | | | |
| 102 | A | 4.5/4.0 | x | none | x | none | none | none |
| 103 | A | 4.5/4.0 | x | none | none | x | none | none |
| 104 | A | 4.5/4.0 | none | none | none | none | x | x |
| 105 | A | 4.5/4.0 | none | x | x | none | none | none |
| 106 | A | 4.5/4.0 | none | x | none | x | none | none |
| 107 | A | 4.5/4.0 | none | x | none | none | x | none |
| 108 | A | 4.5/4.0 | none | x | none | none | none | x |
| 109 | A | 4.5/4.0 | none | none | x | x | none | none |
| 110 | A | 4.5/4.0 | none | none | x | none | x | none |
| 111 | A | 4.5/4.0 | none | none | x | none | none | x |
| 112 | A | 4.5/4.0 | none | none | none | x | x | none |
| 113 | A | 4.5/4.0 | none | none | none | x | none | x |
| 114 | A | 4.5/4.0 | none | none | none | none | x | x |
| 115 | E | 4.5/4.0 | x | x | | | | |
| 116 | E | 4.5/4.0 | x | none | x | none | none | none |
| 117 | E | 4.5/4.0 | x | none | none | x | none | none |
| 118 | E | 4.5/4.0 | none | none | none | none | x | x |
| 119 | E | 4.5/4.0 | none | x | x | none | none | none |
| 120 | E | 4.5/4.0 | none | x | none | x | none | none |
| 121 | E | 4.5/4.0 | none | x | none | none | x | none |
| 122 | E | 4.5/4.0 | none | x | none | none | none | x |
| 123 | E | 4.5/4.0 | none | none | x | x | none | none |
| 124 | E | 4.5/4.0 | none | none | x | none | x | none |
| 125 | E | 4.5/4.0 | none | none | x | none | none | x |
| 126 | E | 4.5/4.0 | none | none | none | x | x | none |
| 127 | E | 4.5/4.0 | none | none | none | x | none | x |
| 128 | E | 4.5/4.0 | none | none | none | none | x | x |

*none: compound not added*
*x: compound added*

Stability analysis is performed according to Example 7.

Use of a combination of organic acids further strengthens the antimicrobial efficacy, due to differences in the specific mode-of-action of the different acids. The differences in mode-of-action are linked to the differences in molecular structure of the acids, which may lead to synergistic interactions.

The combination of two organic acids can provide a microbial stability at a higher pH than a single organic acid.

**Example 17**

*Provision of different food additives (FA201-238) using addition of LAB (lactic acid bacteria)*

| FA# | spent grain sample | pH adjusted to: a/b | LAB strain I/II | Inorganic acid | Acetic acid/salt | Lactic acid/salt | Malic acid/salt | Tartaric acid/salt | Sorbic acid/salt |
|---|---|---|---|---|---|---|---|---|---|
| 201 | A | none | x | none | none | none | none | none | none |
| 202 | A | 4.5/4.0 | x | x | none | none | none | none | none |
| 203 | A | 4.5/4.0 | x | none | x | none | none | none | none |
| 204 | A | 4.5/4.0 | x | none | none | x | none | none | none |
| 205 | A | 4.5/4.0 | x | none | none | none | x | none | none |
| 206 | A | 4.5/4.0 | x | none | none | none | none | x | none |
| 207 | A | 4.5/4.0 | x | none | none | none | none | none | x |
| 208 | B | 4.5/4.0 | x | none | none | none | none | none | none |
| 209 | B | 4.5/4.0 | x | x | none | none | none | none | none |
| 210 | B | 4.5/4.0 | x | none | x | none | none | none | none |
| 211 | B | 4.5/4.0 | x | none | none | x | none | none | none |
| 212 | B | 4.5/4.0 | x | none | none | none | x | none | none |
| 213 | B | 4.5/4.0 | x | none | none | none | none | x | none |
| 214 | B | 4.5/4.0 | x | none | none | none | none | none | x |
| 215 | C | 4.5/4.0 | x | none | none | none | none | none | none |
| 216 | C | 4.5/4.0 | x | x | none | none | none | none | none |
| 217 | C | 4.5/4.0 | x | none | x | none | none | none | none |
| 218 | C | 4.5/4.0 | x | none | none | x | none | none | none |
| 219 | C | 4.5/4.0 | x | none | none | none | x | none | none |
| 220 | C | 4.5/4.0 | x | none | none | none | none | x | none |
| 221 | C | 4.5/4.0 | x | none | none | none | none | none | x |
| 222 | D | 4.5/4.0 | x | none | none | none | none | none | none |
| 223 | D | 4.5/4.0 | x | x | none | none | none | none | none |
| 224 | D | 4.5/4.0 | x | none | x | none | none | none | none |
| 225 | D | 4.5/4.0 | x | none | none | x | none | none | none |
| 226 | D | 4.5/4.0 | x | none | none | none | x | none | none |
| 227 | D | 4.5/4.0 | x | none | none | none | none | x | none |
| 228 | D | 4.5/4.0 | x | none | none | none | none | none | x |
| 229 | E | 4.5/4.0 | x | none | none | none | none | none | none |
| 230 | E | 4.5/4.0 | x | x | none | none | none | none | none |
| 231 | E | 4.5/4.0 | x | none | x | none | none | none | none |
| 232 | E | 4.5/4.0 | x | none | none | x | none | none | none |
| 233 | E | 4.5/4.0 | x | none | none | none | x | none | none |

(continued)

| FA# | spent grain sample | pH adjusted to: a/b | LAB strain I/II | Inorganic acid | Acetic acid/salt | Lactic acid/salt | Malic acid/salt | Tartaric acid/salt | Sorbic acid/salt |
|---|---|---|---|---|---|---|---|---|---|
| 234 | E | 4.5/4.0 | x | none | none | none | none | x | none |
| 235 | E | 4.5/4.0 | x | none | none | none | none | none | x |

LAB I = Lactobacillus plantarum
LAB II = Lactococcus lactis

Stability analysis is performed according to Example 7.

Use of live lactic acid bacteria in conjunction with reduced pH by addition of an organic acid provides a three-fold antimicrobial effect:

Lowered pH + undissociated organic acid + competitive effect of another microorganism.

The competitive effect is particularly efficient when using a food-grade microorganism which is well-adapted to the lowered pH, as the lactic acid bacteria.

Furthermore, use of a live lactic acid bacteria culture may increase the nutrition value of the product, and/or provide a pre-and/or pro-biotic effect.

**Example 18**

*Microbial analysis of a spent grain sample (CFU/g)*

| Parameter | Method | Result | Unit |
|---|---|---|---|
| **Total count 30°C** | NMKL 86 | $3.2 \times 10^6$ | CFU/g |
| **Yeast** | NMKL 98 mod. | $3.7 \times 10^4$ | CFU/g |
| **Mould** | NMKL 98 mod. | < 100 | CFU/g |
| **S-red. bacteria** | ISO 15213 | < 400* | CFU/g |
| **Aerobic spores** | NMKL 189 | < 400* | CFU/g |
| **Anaerobic spores** | NMKL 189 | < 100 | CFU/g |
| **aW** | NMKL 168 | 0.99 | per unit |
| **pH** | NMKL 179 | 6.02 | per unit |
| *A number of organisms below the detection limit has been detected* | | | |

**Example 19**

*Microbial analysis of another spent grain sample (CFU/g) over time*

| Week | Total count | LAB | moulds | yeast |
|---|---|---|---|---|
| 0 | $1.7 \times 10^6$ | $1.8 \times 10^6$ | < 10 | < 10 |
| 2 | $21 \times 10^6$ | $19 \times 10^6$ | n.a. | n.a. |
| 4 | $60 \times 10^6$ | $55 \times 10^6$ | n.a. | n.a. |
| 6* | $3.0 \times 10^6$ | $2.5 \times 10^6$ | n.a. | n.a. |
| 10 | $54 \times 10^6$ | $39 \times 10^6$ | < 10 | > 1500 |
| 14 | $22 \times 10^6$ | $21 \times 10^6$ | n.a. | n.a. |
| 18 | $63 \times 10^6$ | $86 \times 10^6$ | n.a. | n.a. |

*Reference methods: Total count: ISO 4833-1; LAB: FVST 08:2007; yeast and moulds; NMKL 98:2005; n.a. not analysed*
*\*) week 6 appears to be an outlier*

**List of References**

Buffington, J. (2014) The Economic Potential of Brewer's Spent Grain (BSG) as a Biomass Feedstock. Advances in Chemical Engineering and Science, 4, 308-318.

**Claims**

1.  A method for providing a spent grain-derived food additive, said method comprising the steps of:

    (a) providing moist spent grain;
    (b) adjusting the pH of the spent grain to 4.5 or below, such as a pH in the range of 3.5-4.5, by addition of a pH regulator to provide a pH-adjusted product and/or food additive;
    (c) packaging said pH-adjusted product to provide a packaged pH-adjusted product and/or food additive; and optionally
    (d) subjecting said moist spent grain, pH-adjusted product, packaged product or food additive to a viable cell count-controlling treatment.

2.  A method according to claim 1, wherein the moist spent grain has a water content of at least 20, 30, 40, 50, 60, 70, 80, 85% (w/w) or more.

3.  A method according to any one of the preceding claims, wherein the spent grain is fresh, i.e. the spent grain is provided within 1, 2, 3, 4, 5, 7, 10, 15, 20, 30, 45 or 60 min after wort separation or less.

4.  A method according to any one of the preceding claims, wherein the spent grain has a temperature of at least 40°C; 45°C; 50°C, 55°C, 60°C, 65°C; or 70°C.

5.  A method according to any one of the preceding claims, wherein said spent grain has a moisture content of 60-95%, 70-90 %, 72-88% or 75-85% (weight/weight); and/or a water activity of 0.98-1.0, 0.985-0.998, or 0.990-0.995, or around 0.992.

6.  A method according to any one of the preceding claims, wherein the pH is adjusted to 4.4 or below; 4.3 or below; 4.2 or below; 4.1 or below; 4.0 or below; 3.9 or below; 3.8 or below; 3.7 or below; 3.6 or below; or 3.5 or below.

7.  A method according to any one of the preceding claims, wherein the pH regulator is or comprises one or more of: (i) one or more organic acid, (ii) one or more salt of an organic acid, (iii) one or more inorganic acid, and/or (iv) one or more salt of an inorganic acid; including any combination(s) thereof; and optionally, wherein the organic acid(s) is/are selected from: acetic acid, lactic acid, malic acid, tartaric acid, and sorbic acid, including any combination(s) thereof; and/or wherein the salt(s) of the organic acid(s) is/are selected from: sodium acetate, potassium acetate, calcium acetate, sodium lactate, potassium lactate, calcium lactate, sodium malate, sodium hydrogen malate, calcium malate, sodium tartrate, potassium tartrate, calcium tartrate, sodium sorbate, potassium sorbate, and calcium sorbate, including any combination thereof; and/or wherein the organic acid and/or the salt of the organic acid is a compound with E number 170(i), 200, 201, 202, 203, 210, 211, 212, 213, 214, 215, 216, 217, 218, 219, 260, 261(i), 262, 263, 270, 280, 281, 282, 283, 290, 296, 297, 300, 301, 302, 325, 326, 327, 330, 331(i), 331(iii), 332(i), 332(ii), 333(iii), 334, 338, 339, 340, 341, 343, 350(i), 350(ii), 352(ii), 355, 356, 363, 380, 450, 500(i), 500(iii), 501(i), 501(ii), 503(i), 503(ii), 504(i), 504(ii), 513, 514(i), 514(ii), 515(i), 516, 524, 525, 526, 527, 528, 529, 530, 574, 575, 577, 578, or 578.

8.  A method according to any one of the preceding claims, wherein viable cell count-reducing treatment comprises one or more of: heat treatment, pasteurisation, removal of $O_2$; packaging under $N_2$ atmosphere, reducing air pressure, addition of one or more microorganism(s) generally recognized as safe (GRAS) and/or possessing a positive QPS status on the list "QPS notification until 2019", such as one or more of (i) Lactobacillus (Lb), such as one or more of Lb acidophilus, Lb amylolyticus, Lb amylovorans, Lb animalis, Lb brevis, Lb buchneri, Lb casei, Lb cellobiosus, Lb delbrueckii, Lb diolivorans, Lb farciminis, Lb fermentum, Lb helveticus, Lb hilgardii, Lb lactis, Lb mucosae, Lb paracasei, Lb parafarraginis, Lb pentosus, Lb plantarum, Lb reuteri, Lb paracasei, Lb sakei, Lb salivarius, inlcuding any combination thereof; (ii) Lactococcus, such as Lactococcus lactis; or (iii) Pediococcus, such as one or more of Pediococcus acidilactici, Pediococcus parvulus, Pediococcus pentosaceus, including any combination thereof.

9.  A method according to any one of the preceding claims, wherein said method does not comprise a drying step and/or wherein said method does not comprise a comminuting step.

10. A food or feed additive provided according to any one of the preceding steps, wherein said additive has a shelf life of at least 3, 4, 5, 7, 10, 14, 20 or 30 days at room temperature, and/or at least 5, 6, 8 10 days or 1, 2, 4, 6 12 weeks under refrigeration at 7°C.

11. Use of moist spent grain-derived food or feed additive according to any one of the preceding claims in the provision of a food or feed product.

12. A food or feed product comprising 0.1-99.9% (w/w) of a food additive according to any one of claims 1-10, and optionally, wherein the food product is selected from one or more of: snacks, in particular cereal bar and/or snack bars, wherein the snack e.g. may be pressed, fried and/or toasted; baked product; bakery product, in particular bread, crispbread, pastry; and waffle(s), cookie; patisserie product, e.g. cake; breakfast cereal; sauce; beverage, such as instant drink, smoothie; pasta; paste; spread; filling; and product comprising ground meat or meat-analogue, such sausage, cured sausage and meat dough; soup and instant food.

13. A system for providing a feed or food additive according to any one of claims 1-10, comprising:

    x. solid/liquid separation means (20) such as a lauter tun or mash filtration system for providing a moist spent grain from mash;
    y. conservation means (50) for contacting the moist spent grain with at least one conservation agent (51, 52), said conservation means comprising pH adjusting means for providing pH-adjusted moist spent grain, comprising e.g.:

        (i) a pH monitoring device, such as pH meter
        (ii) a dosage device for addition of one or more conservation agents (51, 52),
        (iii) and optionally stirring means (58) such as a mixer for mixing the moist spent grain;
        and

    z. packaging means (70) such as a filling system for packaging the pH-adjusted and/or conserved spent grain in a sealable container and/or tank;
    and optionally,
    wherein the solid/liquid separation means (20) comprises two filtration units in series, wherein, when in operation, the first unit is adapted to provide moist spent grain with a first water content, such as a water content of around at least 60, 70, 80, 85% or more (w/w) and the second filtration provides a moist spent grain with a second water content, such as at least 20, 30, 40, 50, or 60%, wherein the first water content is higher than the second water content.

14. A modification of a brewing system by incorporating a system according to claim 13.

15. A computer program product comprising software code portions configured for, when run in the memory of a computer, executing the method according to any one of claims 1-10, and/or controlling the system according to any one of claims 13 or 14.

10

52

51

55

90

20

30

50

**Figure 1**

10

52

51

55

90

20

30

80

50

**Figure 2**

**Figure 3**

**Figure 4**

**Figure 5**

**Figure 6**

**Figure 7**

**Figure 8**

Europäisches
Patentamt

European
Patent Office

Office européen
des brevets

# EUROPEAN SEARCH REPORT

**Application Number**

EP 20 18 7695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 94 20 637 U1 (STEIRERBRAU AG [AT]) 4 May 1995 (1995-05-04) * page 1, paragraph 1 - page 8, paragraph 4; claims; figures; example 1 * ----- | 1-15 | INV. A23K10/38 A23L7/10 A23L7/20 C12F3/06 A23K30/15 |
| X | AL-HADITHI ET AL: "Study of the possibility of using some organic acids as preservatives for brewery by-products", JOURNAL OF AGRICULTURE AND WATER RESOURCES RESEARCH : JAWRR, SCIENTIFIC RESEARCH COUNCIL * AGRICULTURAL AND WATER RESOURCES RESEARCH CENTER, BAGHDAD (IRAQ), vol. 4, 1 January 1985 (1985-01-01), pages 229-242, XP009503530, | 1-12 | |
| A | * Pages 230-231: Materials & methods; Page 233 par.4-5; Page 242: Title & Abstract; Tables 2-5 * ----- | 13-15 | |
| X | US 4 828 846 A (RASCO BARBARA A [US] ET AL) 9 May 1989 (1989-05-09) | 12 | |
| A | * column 1, line 11 - column 5, line 25 * ----- | 1-11, 13-15 | TECHNICAL FIELDS SEARCHED (IPC) A23K C11C A23L C12F |
| X | WO 2019/023647 A1 (COORS BREWING CO [US]) 31 January 2019 (2019-01-31) | 13-15 | |
| A | * paragraph [0002] - paragraph [0066]; figures * ----- | 1-12 | |

The present search report has been drawn up for all claims

| Place of search | Date of completion of the search | Examiner |
|---|---|---|
| Munich | 30 September 2020 | Alevisopoulos, S |

EPO FORM 1503 03.82 (P04C01)

## ANNEX TO THE EUROPEAN SEARCH REPORT
## ON EUROPEAN PATENT APPLICATION NO.

EP 20 18 7695

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2020

| Patent document cited in search report | | Publication date | Patent family member(s) | | Publication date |
|---|---|---|---|---|---|
| DE 9420637 | U1 | 04-05-1995 | NONE | | |
| US 4828846 | A | 09-05-1989 | NONE | | |
| WO 2019023647 | A1 | 31-01-2019 | CA | 3071422 A1 | 31-01-2019 |
| | | | EP | 3657955 A1 | 03-06-2020 |
| | | | US | 2020260757 A1 | 20-08-2020 |
| | | | WO | 2019023647 A1 | 31-01-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018202799 A

### Non-patent literature cited in the description

- Principle: The sample is dried at 130°C until stable and the loss of weight is determined by weighing. *Water content: ISO 712,* 15 November 2009

- **BUFFINGTON, J.** The Economic Potential of Brewer's Spent Grain (BSG) as a Biomass Feedstock. *Advances in Chemical Engineering and Science,* 2014, vol. 4, 308-318